(19) Europäisches Patentamt
European Patent Office
Office européen des brevets

(11) EP 3 260 913 B1

(12) EUROPÄISCHE PATENTSCHRIFT

(45) Veröffentlichungstag und Bekanntmachung des Hinweises auf die Patenterteilung:
**15.09.2021 Patentblatt 2021/37**

(51) Int Cl.:
***G02F 1/137*** (2006.01) ***G02F 1/1335*** (2006.01)

(21) Anmeldenummer: **17176576.1**

(22) Anmeldetag: **19.06.2017**

(54) **OPTISCHE SCHALTVORRICHTUNG**

OPTICAL SWITCHING DEVICE

DISPOSITIF DE COMMUTATION OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.06.2016 EP 16175747**

(43) Veröffentlichungstag der Anmeldung:
**27.12.2017 Patentblatt 2017/52**

(73) Patentinhaber: **Merck Patent GmbH**
**64293 Darmstadt (DE)**

(72) Erfinder:
- **Junge, Michael**
**64319 Pfungstadt (DE)**
- **Beyer, Andreas**
**63452 Hanau (DE)**
- **Fischer, Mila**
**64367 Muehltal (DE)**

(56) Entgegenhaltungen:
**WO-A1-2012/052100**
**WO-A1-2014/187529**
**WO-A1-2015/055274**
**WO-A1-2015/117736**
**US-A1- 2016 033 807**
**US-A1- 2016 085 108**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 260 913 B1

Printed by Jouve, 75001 PARIS (FR)

## Beschreibung

Die vorliegende Erfindung betrifft eine optische Schaltvorrichtung, die eine Polarisationsschicht und eine Schaltschicht aufweist, wobei die Schaltschicht ein flüssigkristallines Material enthaltend einen dichroitischen Farbstoff enthält. Die Erfindung betrifft weiterhin die Verwendung der optischen Schaltvorrichtung zur Regulierung des Lichtdurchtritts durch ein Flächenelement, insbesondere zur Regulierung des Lichteinfalls in ein Raumelement, beispielsweise einen Gebäudeinnenraum oder einen Fahrzeuginnenraum.

Unter dem Begriff Licht wird im Rahmen der vorliegenden Erfindung insbesondere elektromagnetische Strahlung im UV-A-, VIS-, sowie NIR-Bereich verstanden, d.h. gemäß üblicher Definitionen Licht einer Wellenlänge von 320 nm bis 2000 nm.

Bevorzugt wird unter dem Licht, dessen Durchtritt von der erfindungsgemäßen Vorrichtung reguliert wird, Sonnenlicht verstanden. Sonnenlicht geht bevorzugt direkt von der Sonne aus. Es kann jedoch auch indirekt von der Sonne ausgehen, beispielsweise über Spiegelung, Brechung, oder über Absorption und anschließende Emission durch beliebige Materialien.

Die erfindungsgemäße Vorrichtung wird entsprechend bevorzugt dafür verwendet, den Durchtritt von Sonnenlicht durch ein Flächenelement zu regulieren, insbesondere den Durchtritt von Sonnenlicht durch ein Flächenelement in ein weitgehend abgeschlossenes Raumelement hinein zu regulieren. Derartige Vorrichtungen sind sind auch unter dem Überbegriff schaltbare Fenster (switchable windows, smart windows) bekannt. Diese sind im Überblick beispielsweise in B. Jelle et al., Solar Energy Materials & Solar Cells 2012, S. 1 - 28, beschrieben.

Eine Variante dieser schaltbaren Fenster verwendet flüssigkristalline Materialien als Materialien für die Schaltschicht. Für derartige Vorrichtungen, die auf dem Schalten durch flüssigkristalline Materialien beruhen, sind eine Vielzahl von unterschiedlichen Funktionsprinzipien bekannt, beispielsweise der TN-Modus, der VA-Modus und der Guest-Host-Modus.

Die genannten Vorrichtungen weisen in einigen Punkten Verbesserungsbedarf auf. Hierzu zählt insbesondere die Fähigkeit, den Lichtdurchtritt möglichst vollständig zu blockieren, und dies bevorzugt nicht nur bei senkrechtem Blick auf die Vorrichtung, sondern auch für den seitlichen Betrachter. Weiterhin sollte die Vorrichtung dies in einem möglichst breiten Temperaturbereich leisten. Nochmals weiterhin sollte die Vorrichtung langzeitstabil sein, insbesondere bei intensiver Belastung durch Licht, insbesondere UV-Licht, und durch Wärme.

WO 2014/187529 A1 beschreibt eine Vorrichtung zur Regulierung des Energiedurchtritts enthaltend eine Schaltschicht, in welcher bestimmte Benzothiadiazol-Derivate als dichroitische Farbstoffe in einem flüssigkristallinen Medium enthalten sind. US 2016/0085108 A1 beschreibt eine Vorrichtung zur Regulierung des Energiedurchtritts enthaltend zwei Schaltschichten, welche jeweils ein flüssigkristallines Medium mit mindestens einer dichroitischen Verbindung enthalten.

WO 2015/055274 A1 beschreibt eine Vorrichtung zur Regulierung des Lichteintritts in einen Raum, welche eine Schaltschicht enthaltend ein flüssigkristallines Medium und eine dichroitische Verbindung umfasst, wobei das flüssigkristalline Medium in einem Schaltzustand der Vorrichtung in einem verdrillt nematischen Zustand vorliegt.

WO 2015/117736 A1 beschreibt ein schaltbares Flüssigkristall-Fenster, welches auf dünnen Glasscheiben basiert und biegsam ist.

WO 2012/052100 A1 beschreibt ein Schaltelement, welches ein flüssigkristallines Medium enthält und temperaturabhängig schaltet.

US 2016/0033807 A1 beschreibt eine Vorrichtung zur Regulierung des Lichdurchtritts enthaltend eine Schaltschicht mit einem einen dichroitischen Farbstoff umfassenden flüssigkristallinen Medium, wobei die Transmission des Lichts im hellen Schaltzustand der Vorrichtung in einem bestimmten Bereich eingestellt ist.

Als Vorrichtungen basierend auf flüssigkristallinen Materialien in der Schaltschicht, die den Lichtdurchtritt möglichst vollständig blockieren, sind dem Fachmann insbesondere Vorrichtungen basierend auf dem TN-Modus und dem VA-Modus bekannt, die keine Farbstoffe in der Schaltschicht enthalten. Für schaltbare Fenster, die in der Lage sein sollen, den Lichtdurchtritt möglichst vollständig blockieren, bieten sich aus Sicht des Fachmanns daher insbesondere LC-Zellen mit den oben genannten Moden TN und VA an. Diese weisen jedoch einige Nachteile auf, unter anderem eine hohe Temperaturempfindlichkeit. Zudem ist die Blockierung des Lichts bei den genannten Moden nur in bestimmten Winkeln gegeben, unter denen die Vorrichtung betrachtet wird. Dies ist für die Anwendung in Fenstern unerwünscht, da schaltbare Fenster nicht wie Displays unter einem weitgehend konstanten Blickwinkel gesehen werden. Zudem trägt Licht, das unter Winkeln auf ein schaltbares Fenster trifft, für die nur eine geringe Blockierwirkung durch die LC-Zelle vorliegt, zur Aufheizung des Innenraums bei, so dass der dunkle Schaltzustand des schaltbaren Fensters den Energieeintrag durch Sonnenlicht in einen Innenraum nicht so effektiv wie gewünscht blockiert.

Auf der Suche nach einem Ausweg aus dieser Situation wurde nun überraschend gefunden, dass eine auf bestimmte Weise gestaltete Vorrichtung enthaltend eine Polarisationsschicht und eine Schaltschicht, wobei die Schaltschicht ein flüssigkristallines Material und einen dichroitischen Farbstoff enthält, die oben genannten erwünschten Eigenschaften aufweist.

Gegenstand der vorliegenden Erfindung ist damit eine optische Schaltvorrichtung gemäß Anspruch 1, enthaltend

- eine Polarisationsschicht, und
- parallel zur Polarisationsschicht angeordnet eine Schaltschicht, enthaltend ein flüssigkristallines Material enthaltend mindestens einen dichroitischen Farbstoff, wobei die Schaltschicht einen dunklen Schaltzustand mit geringer Transmission durch die Schaltschicht und einen hellen Schaltzustand mit hoher Transmission durch die Schaltschicht aufweist,

wobei der Lichttransmissionsgrad $T_v$ nach Norm EN410 der Schaltschicht im dunklen Schaltzustand der Vorrichtung für Licht, welches parallel zur Hauptachse der Absorption des mindestens einen dichroitischen Farbstoffs polarisiert ist, kleiner als 3% ist.

Der Lichttransmissionsgrad $T_v$ wird bestimmt wie in der entsprechenden Norm EN410, Gleichung (1), angegeben. Er wird ermittelt aus den gemessenen spektralen Transmissionsgraden unter Berücksichtigung der relativen spektralen Verteilung der Normlichtart und des spektralen Hellempfindlichkeitsgrads des Normalbeobachters. Er wird in Prozent bezogen auf eine ansonsten identische Schaltschicht ohne Farbstoff in der Schaltschicht als Referenz angegeben, entspricht also dem Quotienten der durch die Schaltschicht mit Farbstoffen hindurchgehenden Lichtintensität (Zähler) und der Intensität eines Referenzstrahls, der durch eine baugleiche Schaltschicht ohne Farbstoffe (Nenner) hindurchgeht. Mit dem Lichttransmissionsgrad $T_v$ ist im Rahmen der vorliegenden Erfindung der Lichttransmissionsgrad bei einer Temperatur von 20°C gemeint. Das genaue Verfahren zur Bestimmung von $T_v$ ist in den Ausführungsbeispielen angegeben.

Unter einem flüssigkristallinen Material wird dabei ein Material verstanden, das in mindestens einem Temperaturbereich flüssigkristalline Eigenschaften zeigt. Bevorzugt wird darunter ein Temperaturbereich innerhalb der Spanne von -50°C und 200°C verstanden, besonders bevorzugt innerhalb der Spanne von -30°C bis 150°C. Unter flüssigkristallinen Eigenschaften werden bevorzugt nematisch flüssigkristalline Eigenschaften verstanden.

Unter der Hauptachse der Absorption des mindestens einen dichroitischen Farbstoffs wird bei positiv dichroitischen Farbstoffen die Achse verstanden, parallel zu der die Verbindung die größte Ausdehnung hat (Längsachse). Entsprechend wird bei negativ dichroitischen Farbstoffen darunter die Achse verstanden, senkrecht zu der die Verbindung die größte Ausdehnung hat (Querachse).

Die Vorrichtung weist bevorzugt einen Lichttransmissionsgrad im dunklen Schaltzustand, bestimmt nach der Norm EN410, von weniger als 2%, und am stärksten bevorzugt von weniger als 1% auf. Der Lichttransmissionsgrad der Vorrichtung wird bestimmt wie in den Ausführungsbeispielen angegeben und bezieht sich auf 20°C Temperatur der Vorrichtung.

Bevorzugt ist der Lichttransmissionsgrad $T_v$ der Schaltschicht im dunklen Schaltzustand der Vorrichtung für Licht, welches parallel zur Hauptachse der Absorption des mindestens einen dichroitischen Farbstoffs polarisiert ist, kleiner als 2%.

Die Vorrichtung weist erfindungsgemäß die folgende Schichtenabfolge auf, wobei zusätzlich weitere Schichten vorhanden sein können. Bevorzugt grenzen die im Folgenden angegebenen Schichten in der Vorrichtung direkt aneinander.

- Polarisationsschicht
- Substratschicht, bevorzugt aus Glas oder Polymer
- elektrisch leitfähige transparente Schicht, bevorzugt aus ITO
- Orientierungsschicht
- Schaltschicht, enthaltend ein flüssigkristallines Material und mindestens einen dichroitischen Farbstoff
- Orientierungsschicht
- elektrisch leitfähige transparente Schicht, bevorzugt aus ITO
- Substratschicht, bevorzugt aus Glas oder Polymer.

Für die Polarisationsschicht können grundsätzlich alle dem Fachmann bekannten Produkte eingesetzt werden. Bevorzugt werden Polarisatoren verwendet, die als dünne optische Filme vorliegen. Beispiele für reflektive Polarisatoren, die in der erfindungsgemäßen Vorrichtung verwendet werden können, sind DRPF- (diffusive reflective polariser film, 3M), DBEF-(dual brightness enhanced film, 3M), DBR- (layered-polymer distributed Bragg reflectors, wie in US 7,038,745 und US 6,099,758 beschrieben) und APF-Filme (advanced polariser film, 3M, vgl. Technical Digest SID 2006, 45.1, US 2011/0043732 und US 7023602). Weiterhin können Polarisatoren basierend auf Drahtgittern (WGP, wire-grid-polarisers) eingesetzt werden. Beispiele für absorptive Polarisatoren, welche in den erfindungsgemäßen Vorrichtungen eingesetzt werden können, sind der Itos XP38-Polarisatorfilm, der Nitto Denko GU-1220DUN-Polarisatorfilm, und der Itos XP40HT -Polarisatorfilm.

Bevorzugt ist die Polarisationsschicht aus einem Material gebildet, welches eine oder mehrere verschiedene organische Verbindungen enthält, die eine gemeinsame feste räumliche Ausrichtung aufweisen, und die Licht im sichtbaren Bereich absorbieren, wie beispielsweise im XP40HT-Polarisatorfilm. Besonders bevorzugt ist die Polarisationsschicht aus einem Material gebildet, welches eine oder mehrere verschiedene organische Farbstoffverbindungen enthält, die eine gemeinsame feste räumliche Ausrichtung aufweisen. Bevorzugt sind die Farbstoffverbindungen in diesem Fall in Mischung mit einem orientierten Polymer, das zum Beispiel durch Streckung erhalten werden kann, oder in Mischung mit einem flüssigkristallinen Material in der Schicht vorhanden. Beispiele für derartige Polarisatoren sind in Thulstrup et al., Spectrochimica Acta 1988, 8, 767-782, und in WO 2013/097919 in den Ausführungsbeispielen offenbart. Es wurde gefunden, dass mit einer Polarisationsschicht dieses Typs Schaltvorrichtungen erhalten werden können, welche sehr langzeitstabil sind, insbesondere bei hoher Sonnenlichtbelastung und/oder hohen Temperaturen. Weiterhin kann eine Polarisationsschicht verwendet werden, die aus einem Drahtgitter (WGP, wire-grid-polariser) besteht. Damit können ebenfalls Vorrichtungen mit sehr hoher Lebensdauer erhalten werden. Weiterhin alternativ kann eine Polarisationsschicht verwendet werden, die ein gestrecktes Polymer, bevorzugt PVA, enthält, und darin eingelagertes Iod.

Bevorzugt ist die Polarisationsschicht der erfindungsgemäßen Vorrichtung hoch effektiv, d.h. sie polarisiert Licht zu einem sehr hohen Anteil. Insbesondere ist es bevorzugt, dass die Polarisationsschicht einen Polarisationsgrad von mehr als 95%, besonders bevorzugt von mehr als 98%, ganz besonders bevorzugt von mehr als 99%, jeweils bei 550 nm Wellenlänge des Lichts, aufweist. Der Polarisationsgrad ist dabei definiert als der Quotient zwischen der Differenz von Transmission in Durchlassrichtung und Transmission in Blockierrichtung und der Summe von Transmission in Durchlassrichtung und Transmission in Sperrrichtung. Dies entspricht der Gleichung

$$P = (T1-T2) / (T1+T2)$$

wobei P der Polarisationsgrad ist, T1 die Transmission in Durchlassrichtung und T2 die Transmission in Sperrrichtung.

Erfindungsgemäß enthält die Vorrichtung genau eine Polarisationsschicht. Erfindungsgemäß ist diese auf der nach außen hin gerichteten Seite der Schaltschicht angeordnet, d.h. zwischen der Lichtquelle, insbesondere der Sonne, und der Schaltschicht.

Erfindungsgemäß polarisiert die Polarisationsschicht Licht linear.

Erfindungsgemäß ist die Absorptionsachse der Polarisationsschicht, welche Licht linear polarisiert, im dunklen Schaltzustand der Schaltschicht in einem Winkel von 85° - 95° zur Hauptachse der Absorption des mindestens einen dichroitischen Farbstoffs angeordnet, bevorzugt in einem Winkel von 90°.

Unter der Absorptionsachse der Polarisationsschicht wird diejenige Achse innerhalb der Ebene der Polarisationsschicht verstanden, für die parallel zu der Achse polarisiertes Licht zu einem überwiegenden Teil absorbiert wird. Senkrecht zu der Absorptionsachse polarisiertes Licht wird hingegen zu einem überwiegenden Anteil nicht absorbiert, sondern hindurchgelassen. Die Absorptionsachse der Polarisationsschicht ist senkrecht zur sogenannten Durchlassrichtung der Polarisationsschicht.

Die Orientierungsschichten liegen bevorzugt direkt angrenzend an die beiden Seiten der Schaltschicht vor.

Als Orientierungsschichten der erfindungsgemäßen Vorrichtung können beliebige dem Fachmann hierzu bekannte Schichten verwendet werden. Bevorzugt sind Polyimid-Schichten, besonders bevorzugt Schichten aus geriebenem Polyimid. Auf bestimmte, dem Fachmann bekannte Art geriebenes Polyimid führt zu einer Ausrichtung der Moleküle des flüssigkristallinen Materials in Reiberichtung, wenn die Moleküle parallel zur Orientierungsschicht vorliegen (planare Ausrichtung). Dabei ist es bevorzugt, dass die Moleküle des flüssigkristallinen Materials nicht völlig planar auf der Orientierungsschicht vorliegen, sondern einen leichten Aufstellwinkel aufweisen (pretilt). Zum Erreichen von vertikaler Ausrichtung der Moleküle zur Oberfläche der Orientierungsschicht (homeotrope Ausrichtung) wird bevorzugt auf bestimmte Art behandeltes Polyimid als Material für die Orientierungsschicht eingesetzt (Polyimid für sehr hohe Pretiltwinkel). Weiterhin können Polymere, die durch einen Belichtungsvorgang mit polarisiertem Licht erhalten wurden, als Orientierungsschicht zum Erreichen einer Ausrichtung der Moleküle gemäß einer Orientierungsachse verwendet werden (photoalignment). Exemplarische Materialien bestehen aus Polyacrylaten oder auch aus Zimtsäuren mit polymerisierbaren Gruppen wie Acrylaten.

Es ist bevorzugt, dass in der erfindungsgemäßen Vorrichtung die Orientierungsrichtungen der beiden Orientierungsschichten, die die Schaltschicht umgeben, einen Winkel von 0° bis 270° einschließen.

Unter dem Begriff Orientierungsrichtung wird dabei die Richtung verstanden, in der die Orientierungsschicht die Moleküle der Schaltschicht ausrichtet. Die kann, abhängig von der Herstellungsart der Orientierungsschicht, beispielsweise die Reiberichtung oder die Ausrichtungsrichtung der Polymere beim Photoalignment sein.

Erfindungsgemäß hat die Schaltschicht eine Dicke zwischen 2 und 15 μm, bevorzugt zwischen 5 und 10 μm. Dünnere Schaltschichten führen in der vorliegenden Anwendung mit flexiblen Substraten zu stabileren Vorrichtungen, insbesondere tritt ein unerwünschtes Verschieben der Spacer gegen die Substratschichten weniger leicht auf.

Die Schaltschicht wird bevorzugt durch Anlegen einer elektrischen Spannung und dadurch bedingtes Entstehen

eines elektrischen Felds innerhalb der Schaltschicht geschaltet. Die Spannung wird dabei bevorzugt an Elektroden angelegt, welche auf beiden Seiten der Schaltschicht enthaltend das flüssigkristalline Material angebracht sind. Die Elektroden bestehen bevorzugt aus ITO oder aus einer dünnen, bevorzugt transparenten Metall- und/oder Metalloxidschicht, beispielsweise aus Silber oder einem alternativen, dem Fachmann für diese Verwendung bekannten Material. Die Elektroden sind bevorzugt mit elektrischen Anschlüssen versehen. Die Stromversorgung wird bevorzugt durch eine Batterie, einen Akkumulator, eine Superkapazität oder durch externe Stromversorgung bereitgestellt.

Dabei erfolgt das Schalten durch Anlegen einer elektrischen Spannung bevorzugt von einem dunklen Schaltzustand ohne elektrische Spannung hin zu einem hellen Schaltzustand mit elektrischer Spannung. Unter dem Begriff dunkler Schaltzustand wird dabei ein Schaltzustand verstanden, bei dem durch die Vorrichtung nur wenig Licht hindurchgelassen wird, ihre Transmission also gering ist. Unter dem Begriff heller Schaltzustand wird entsprechend ein Schaltzustand verstanden, bei dem durch die Vorrichtung mehr Licht hindurchgelassen wird, ihre Transmission also relativ höher ist.

Bevorzugt ist das flüssigkristalline Material der Schaltschicht in beiden Schaltzuständen nematisch. Der spannungslose Zustand ist bevorzugt dadurch gekennzeichnet, dass die Moleküle des flüssigkristallinen Materials, und damit der mindestens eine dichroitische Farbstoff, parallel zu den Orientierungsschichten ausgerichtet vorliegen. Dies wird bevorzugt durch eine entsprechend gewählte Orientierungsschicht erreicht. Der Zustand unter Spannung ist bevorzugt dadurch gekennzeichnet, dass die Moleküle des flüssigkristallinen Materials, und damit die dichroitischen Farbstoffe, senkrecht zu den Orientierungsschichten vorliegen.

In einer alternativen Ausführungsform wird die Vorrichtung von einem hellen Schaltzustand, der ohne Spannung vorliegt, durch Anlegen einer Spannung in einen dunklen Schaltzustand überführt. Bevorzugt ist das flüssigkristalline Material in beiden Zuständen nematisch. Der spannungslose Zustand ist bevorzugt dadurch gekennzeichnet, dass die Moleküle des flüssigkristallinen Materials, und damit die dichroitischen Farbstoffe, senkrecht zu den Orientierungsschichten ausgerichtet vorliegen. Dies wird bevorzugt durch eine entsprechend gewählte Orientierungsschicht erreicht. Der Zustand unter Spannung ist dann bevorzugt dadurch gekennzeichnet, dass die Moleküle des flüssigkristallinen Materials, und damit die dichroitischen Farbstoffe, parallel zu den Orientierungsschichten ausgerichtet vorliegen.

Bevorzugt ist die Ausrichtung der Moleküle des flüssigkristallinen Materials der Schaltschicht im planaren Zustand, der bevorzugt dem dunklen Schaltzustand der Schaltschicht entspricht, entweder über die gesamte Höhe der Schaltschicht gleich, oder sie weist eine Verdrillung innerhalb der Schaltschicht auf. Bevorzugte Werte für die Verdrillung liegen zwischen 30° und 360°, besonders bevorzugt zwischen 90° und 270°. Wenn sie eine Verdrillung aufweist (twist), so hat diese Verdrillung bevorzugt einen Wert, der ein Vielfaches von 90° ist. Besonders bevorzugte Werte für die Verdrillung sind 90°, 180° oder 270°. Die Verdrillung wird bevorzugt erreicht, indem die Orientierungsrichtungen auf den verwendeten Orientierungsschichten, die an die Schaltschicht angrenzen, einen entsprechenden Winkel miteinander bilden. Weiterhin ist es im Fall einer Verdrillung bevorzugt, dass das flüssigkristalline Material der Schaltschicht einen chiralen Dotierstoff enthält.

Chirale Dotierstoffe werden im flüssigkristallinen Material bevorzugt in einer Gesamtkonzentration von 0.01 Gew.-% bis 3 Gew.-%, besonders bevorzugt von 0.05 Gew.-% bis 1 Gew.-% eingesetzt. Um hohe Werte für die Verdrillung zu erhalten, kann die Gesamtkonzentration der chiralen Dotierstoffe auch höher als 3 Gew.-% gewählt werden, bevorzugt bis maximal 10 Gew.-%.

Bevorzugte Dotierstoffe sind die in der folgenden Tabelle abgebildeten Verbindungen:

| |
|---|
| 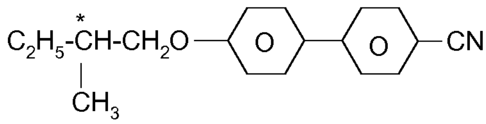 |
| DP-1 |
| 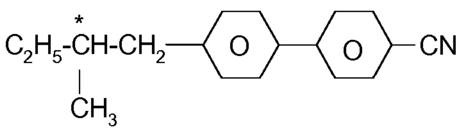 |
| DP-2 |
| 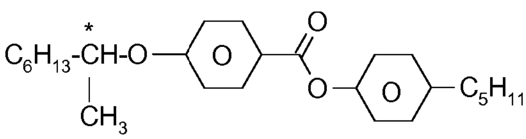 |

(fortgesetzt)

| |
|---|
| DP-3 |
| 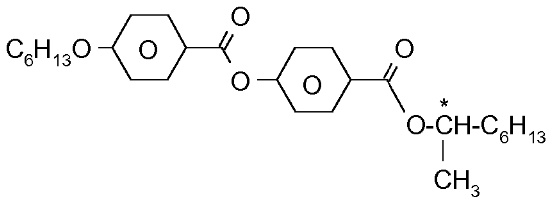 |
| DP-4 |
| 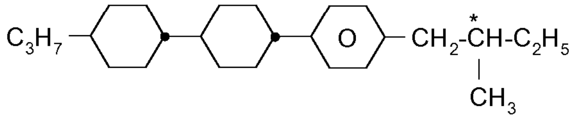 |
| DP-5 |
| 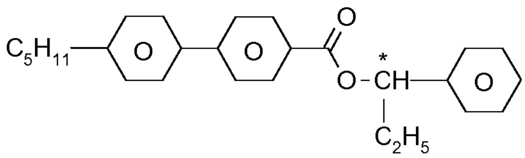 |
| DP-6 |
| 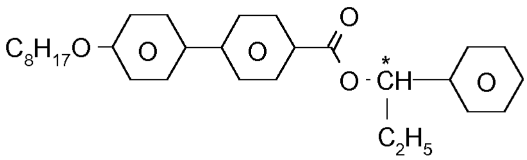 |
| DP-7 |
| 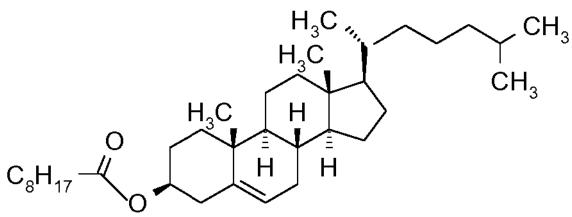 |
| DP-8 |
| 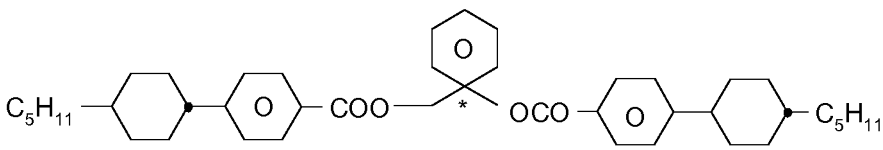 |
| DP-9 |
| 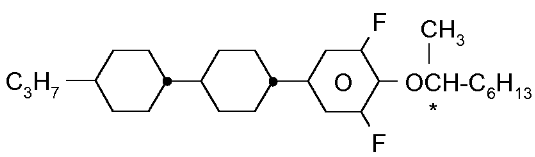 |
| DP-10 |

(fortgesetzt)

| |
|---|
| 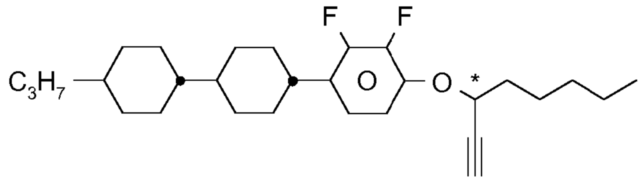 |
| DP-11 |
| 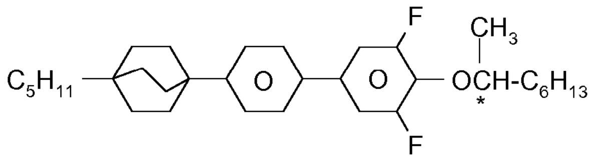 |
| DP-12 |
| 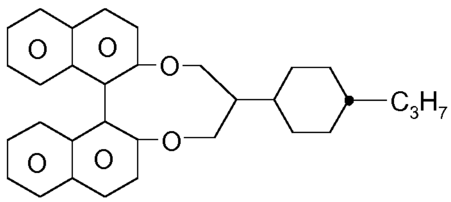 |
| DP-13 |

Das flüssigkristalline Material der Schaltschicht enthält weiterhin bevorzugt einen oder mehrere Stabilisatoren. Die Gesamtkonzentration der Stabilisatoren liegt bevorzugt zwischen 0.00001 Gew.-% und 10 Gew.-%, besonders bevorzugt zwischen 0.0001 Gew.-% und 1 Gew.-% des gesamten flüssigkristallinen Materials.

Bevorzugte Stabilisatoren sind in der folgenden Tabelle gezeigt:

| | |
|---|---|
| 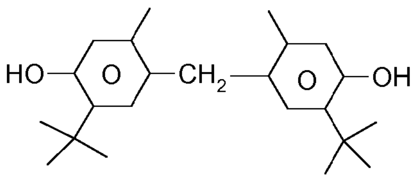 | 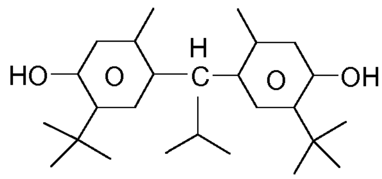 |
| ST-1 | ST-2 |
| 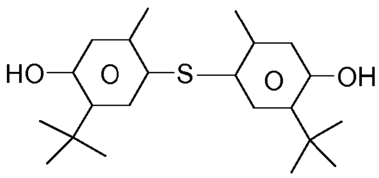 | 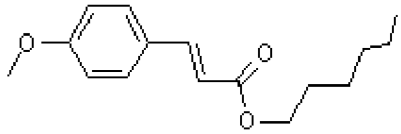 |
| ST-3 | ST-4 |
| 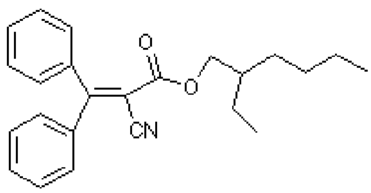 | 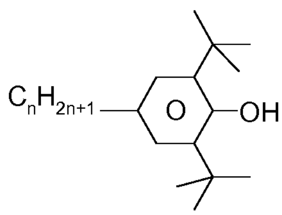 |
| ST-5 | ST-6 |

(fortgesetzt)

| | |
|---|---|
| 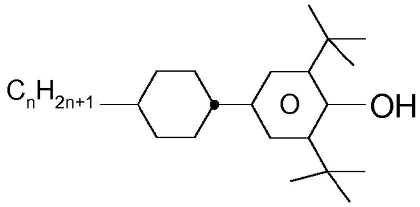 | 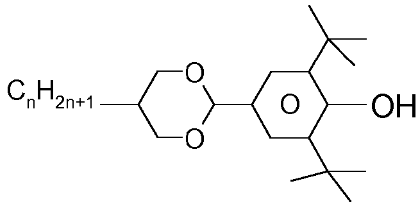 |
| ST-7 | ST-8 |
| 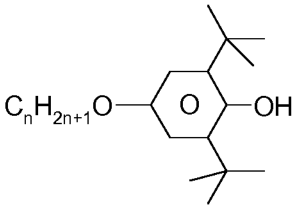 | 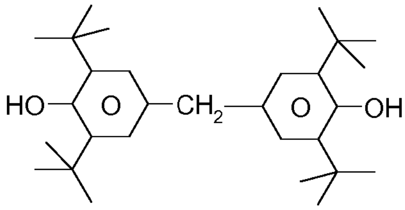 |
| ST-9 | ST-10 |
| 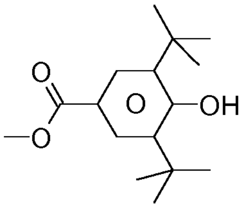 | 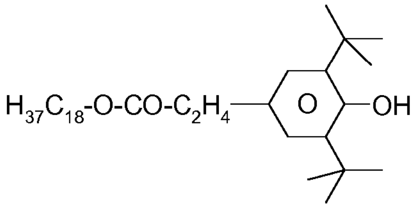 |
| ST-11 | ST-12 |
| 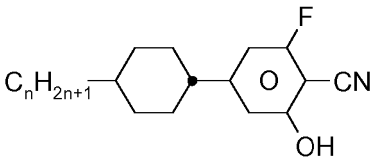 | 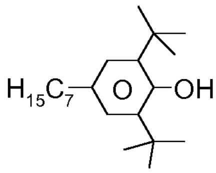 |
| ST-13 | ST-14 |
| 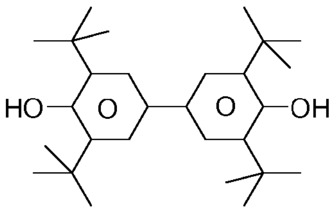 | 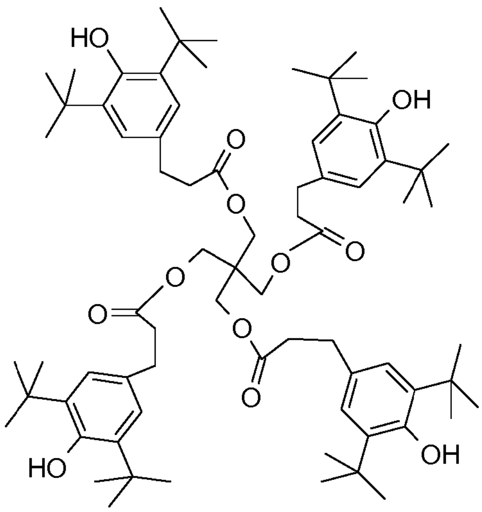 |
| ST-15 | ST-16 |

(fortgesetzt)

| | |
|---|---|
| 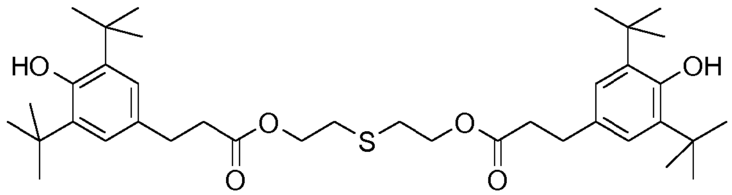 | |
| ST-17 | |
| 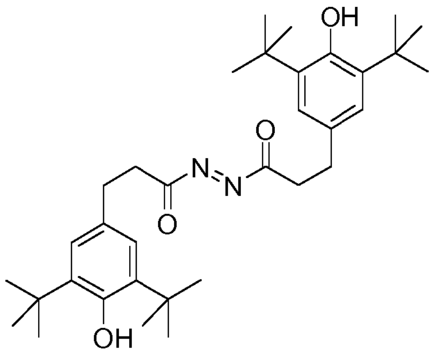 | 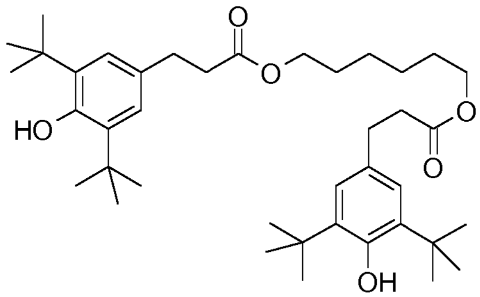 |
| ST-18 | ST-19 |
| 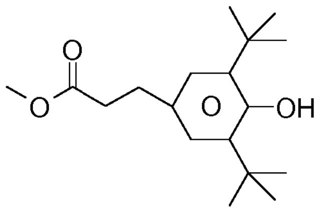 | 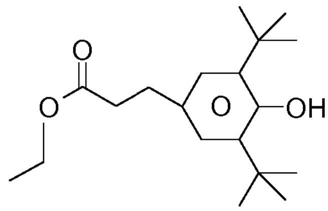 |
| ST-20 | ST-21 |
| 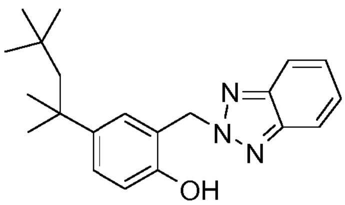 | 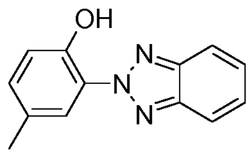 |
| ST-22 | ST-23 |
| 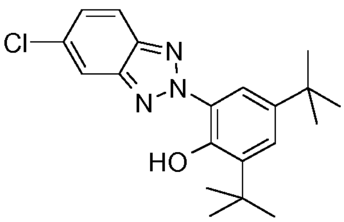 | 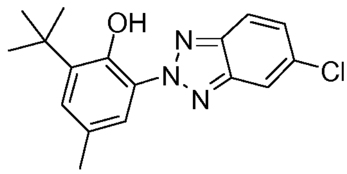 |
| ST-24 | ST-25 |

(fortgesetzt)

| | |
|---|---|
| 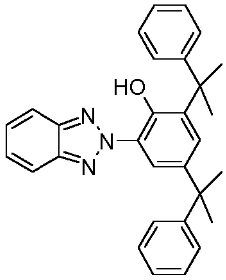 | 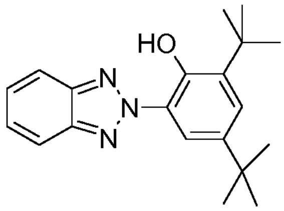 |
| ST-26 | ST-27 |
| 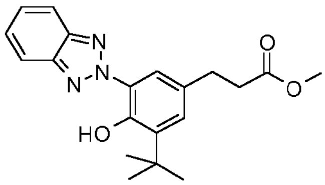 | 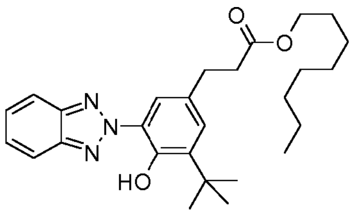 |
| ST-28 | ST-29 |
| 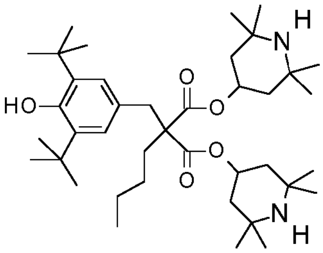 | 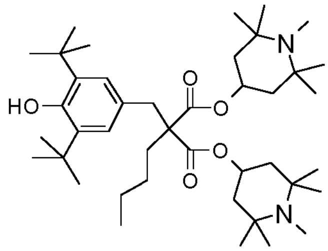 |
| ST-30 | ST-31 |
| 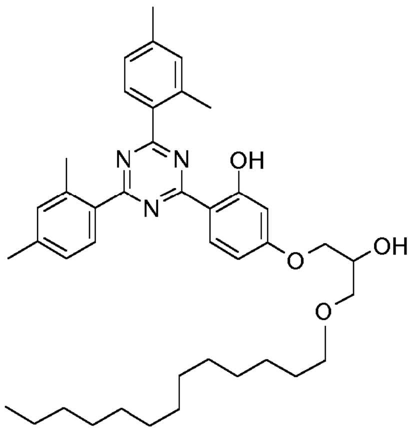 | 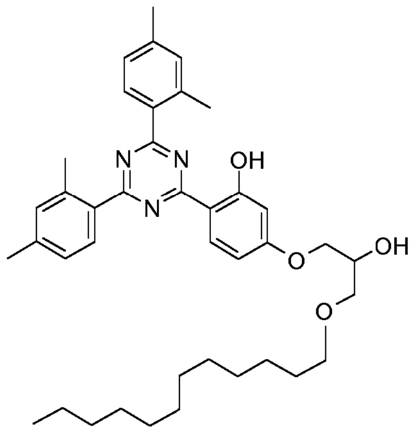 |
| ST-32 | ST-33 |

(fortgesetzt)

| | |
|---|---|
| 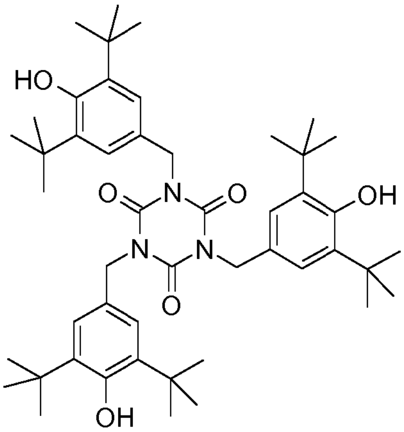 | 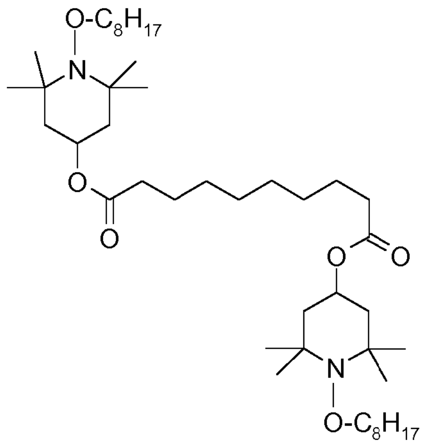 |
| ST-34 | ST-35 |
| 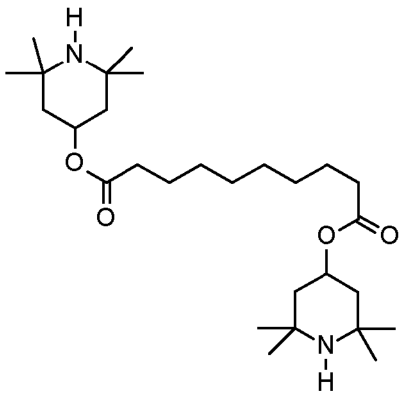 | 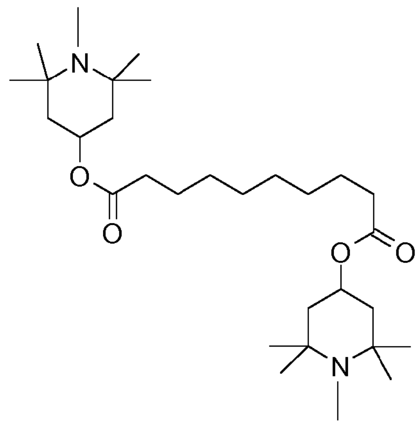 |
| ST-36 | ST-37 |
| 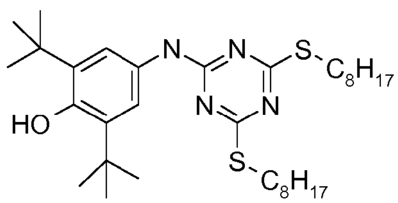 | 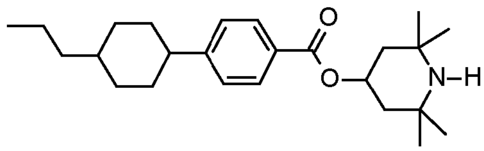 |
| ST-38 | ST-39 |
| 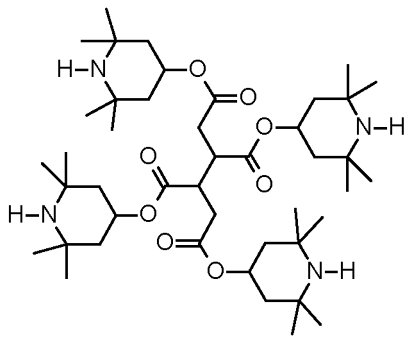 | 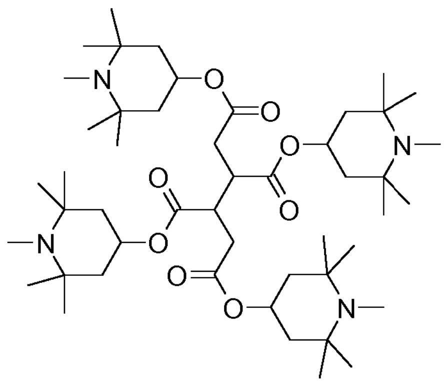 |
| ST-40 | ST-41 |

(fortgesetzt)

| | |
|---|---|
| 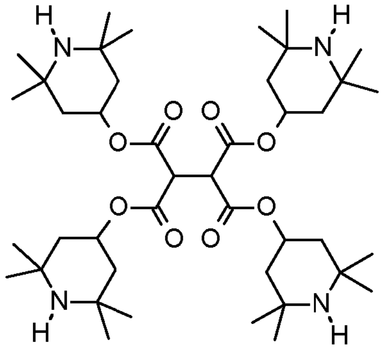 | 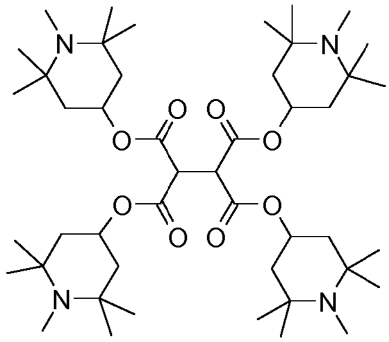 |
| ST-42 | ST-43 |

Bevorzugt ist die Vorrichtung dadurch gekennzeichnet, dass die Schaltschicht mindestens zwei verschiedene dichroitische Farbstoffe Farbstoffe, besonders bevorzugt genau 2, 3, 4, 5 oder 6 verschiedene dichroitische Farbstoffe, ganz besonders bevorzugt genau 2, 3 oder 4 verschiedene dichroitische Farbstoffe enthält. Die dichroitischen Farbstoffe sind bevorzugt organische Verbindungen.

Es ist weiterhin bevorzugt, dass mindestens einer der dichroitischen Farbstoffe lumineszierend ist, bevorzugt fluoreszierend.

Die Absorptionsspektren der dichroitischen Farbstoffe im flüssigkristallinen Medium ergänzen sich bevorzugt derart, dass für das Auge der Eindruck von schwarzer Farbe der Vorrichtung entsteht. Besonders bevorzugt ist die Vorrichtung in allen ihren Schaltzuständen in der Durchsicht farblos, wobei ein grauer oder schwarzer Eindruck ebenfalls als farblos gilt.

Bevorzugt decken die zwei oder mehr dichroitischen Farbstoffe des flüssigkristallinen Materials einen großen Teil des sichtbaren Spektrums ab. Bevorzugt wird dies dadurch erreicht, dass mindestens ein dichroitischer Farbstoff rotes Licht absorbiert, mindestens einer grünes bis gelbes Licht absorbiert und mindestens einer blaues Licht absorbiert.

Wie genau eine Mischung von dichroitischen Farbstoffen hergestellt werden kann, die für das Auge schwarz bzw. grau erscheint, ist dem Fachmann bekannt und beispielsweise in Manfred Richter, Einführung in die Farbmetrik, 2. Auflage, 1981, ISBN 3-11-008209-8, Verlag Walter de Gruyter & Co., beschrieben.

Weiterhin bevorzugt absorbieren die dichroitischen Farbstoffe vorwiegend Licht im UV-VIS-NIR-Bereich, d. h. in einem Wellenlängenbereich von 320 bis 2000 nm. UV-Licht, VIS-Licht und NIR-Licht sind dabei wie oben definiert. Besonders bevorzugt weisen die dichroitischen Farbstoffe Absorptionsmaxima auf, die im Bereich von 400 bis 1300 nm liegen.

Der Gesamtanteil der dichroitischen Farbstoffe im flüssigkristallinen Material beträgt erfindungsgemäß 0,1 bis 15 Gew.-% und ganz besonders bevorzugt 0,2 bis 12 Gew.-%. Der Anteil jedes einzelnen der einen oder mehreren Farbstoffe beträgt bevorzugt 0,01 bis 15 Gew.-%, bevorzugt 0,05 bis 12 Gew.-% und ganz besonders bevorzugt 0,1 bis 10 Gew.-%.

Der mindestens eine dichroitische Farbstoff ist bevorzugt im flüssigkristallinen Material gelöst. Der Farbstoff wird bevorzugt in seiner Ausrichtung durch die Ausrichtung der Moleküle des flüssigkristallinen Materials beeinflusst.

Erfindungsgemäß ist der mindestens eine dichroitische Farbstoff gewählt aus Azoverbindungen, Anthrachinonen, Benzothiadiazolen, insbesondere wie in WO 2014/187529 offenbart, Diketopyrrolopyrrolen, insbesondere wie in WO 2015/090497 offenbart, und Rylenen, insbesondere wie in WO 2014/090373 offenbart. Ganz besonders bevorzugt ist der mindestens eine dichroitische Farbstoff gewählt aus Azofarbstoffen, Benzothiadiazol-Farbstoffen und Rylen-Farbstoffen.

Die folgenden Verbindungen sind Beispiele für bevorzugte dichroitische Farbstoffe:

| |
|---|
| 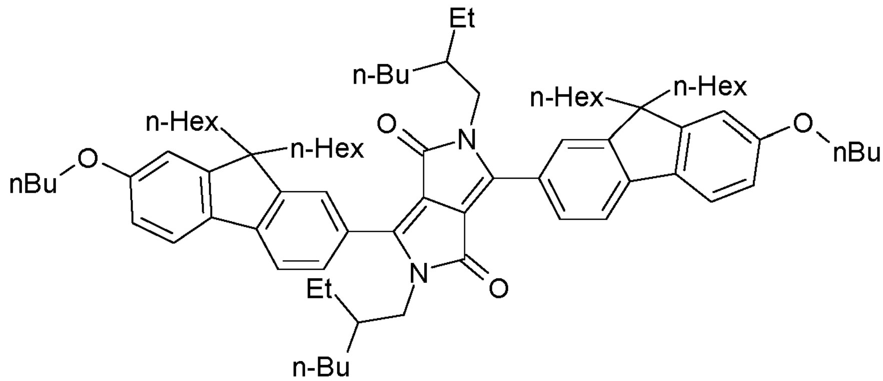 |
| 1 |
| 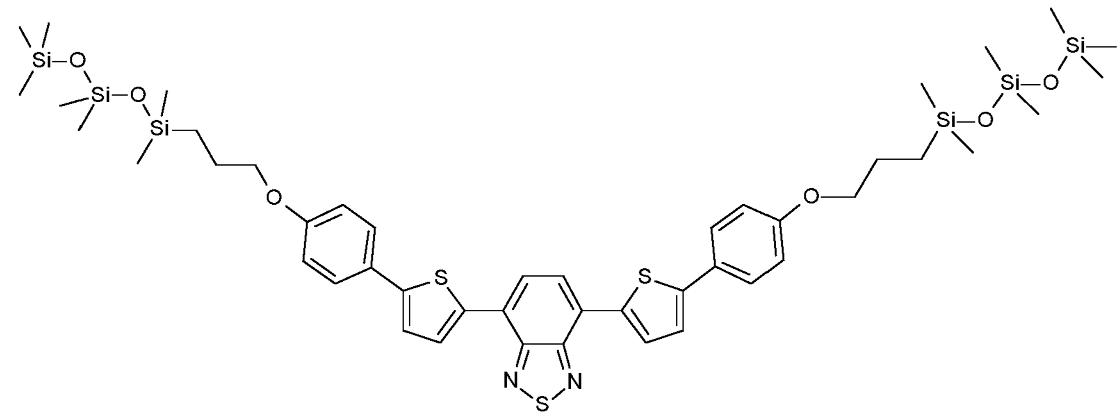 |
| 2 |
| 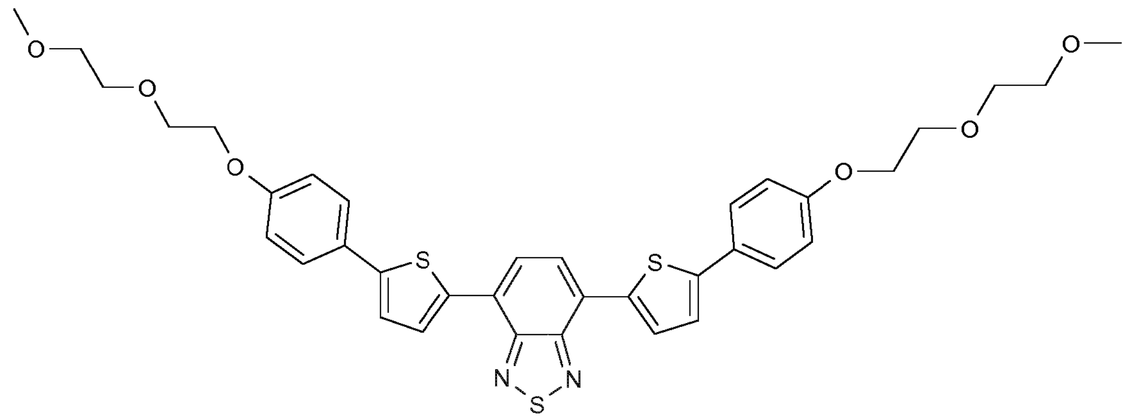 |
| 3 |
| 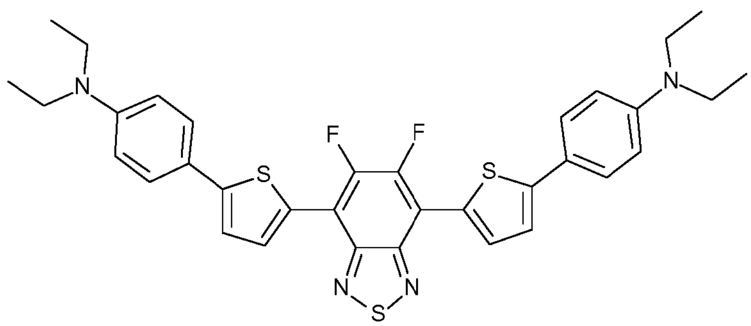 |

(fortgesetzt)

| | |
|---|---|
| 4 | |
| 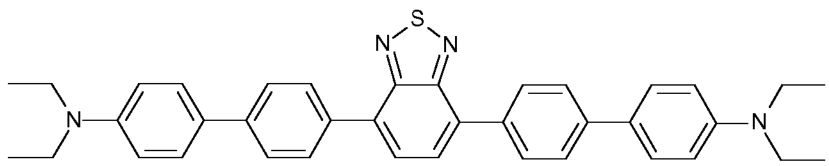 | |
| 5 | |
| 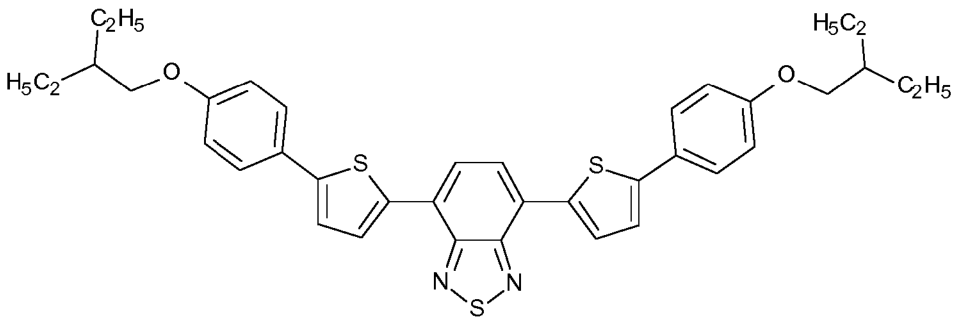 | |
| 6 | |
| 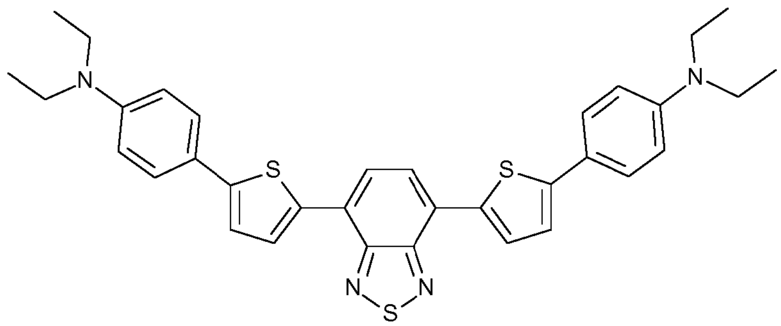 | |
| 7 | |
| 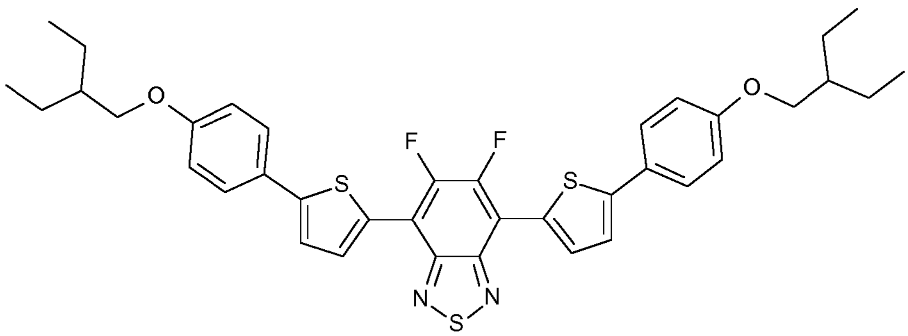 | |
| 8 | |
| 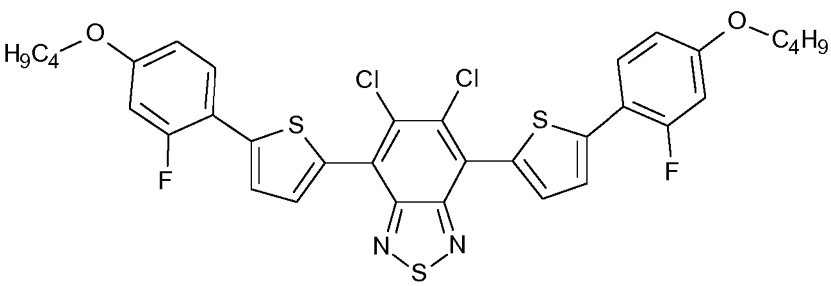 | |

(fortgesetzt)

| |
|---|
| 9 |
| 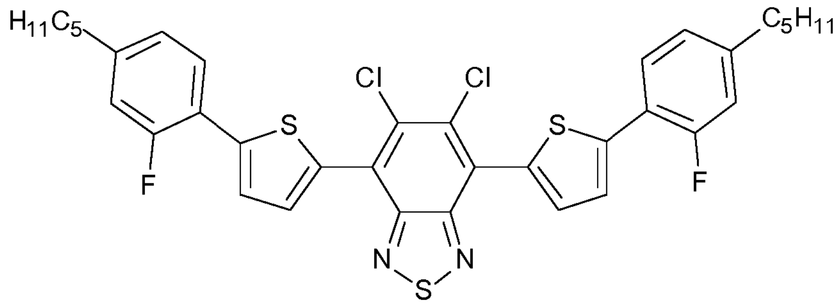 |
| 10 |
| 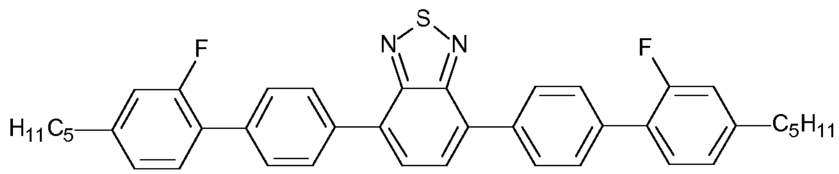 |
| 11 |
| 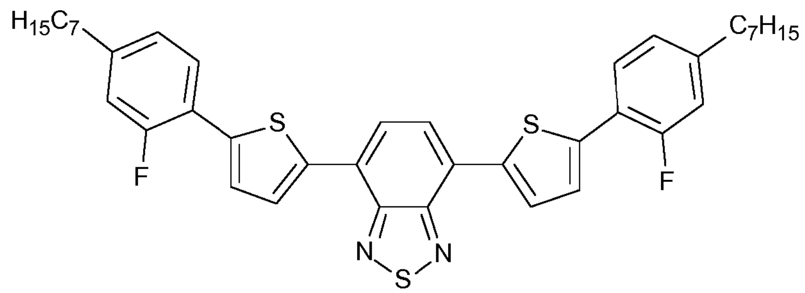 |
| 12 |
| 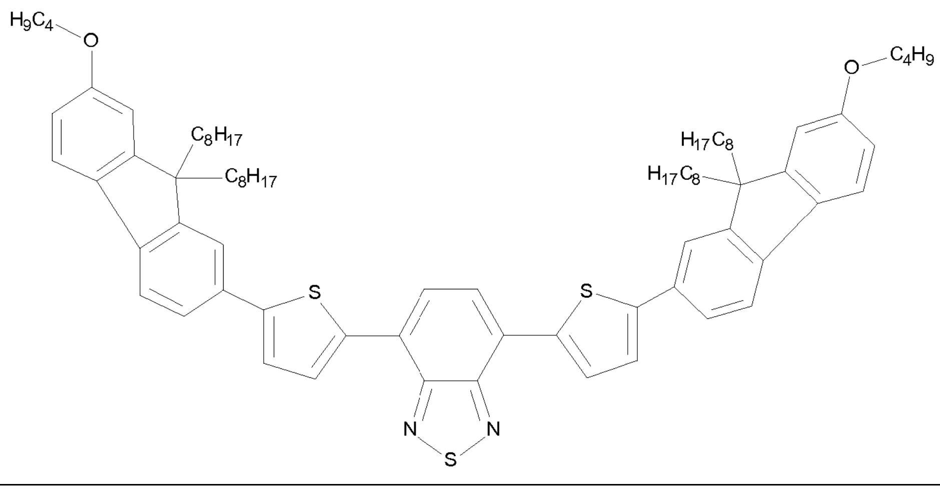 |
| 13 |

(fortgesetzt)

| | |
|---|---|
| 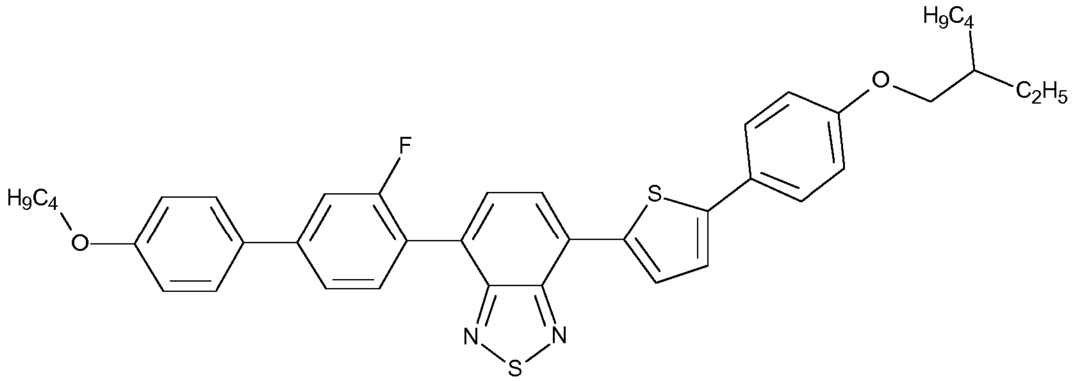 | |
| 14 | |
| 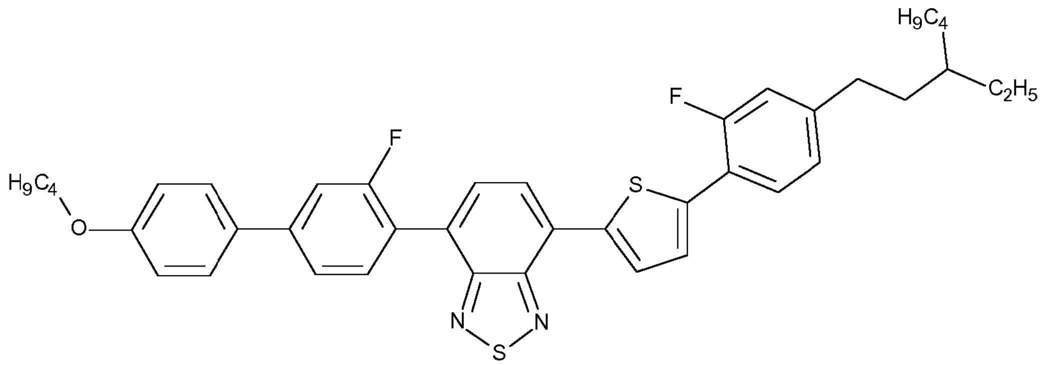 | |
| 15 | |
| 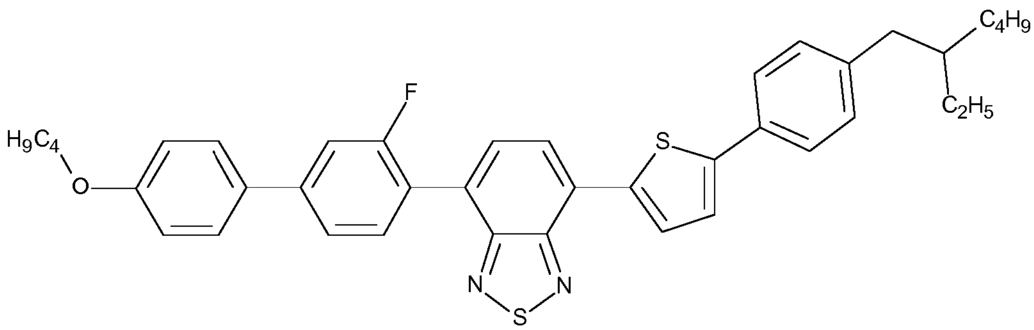 | |
| 16 | |
| 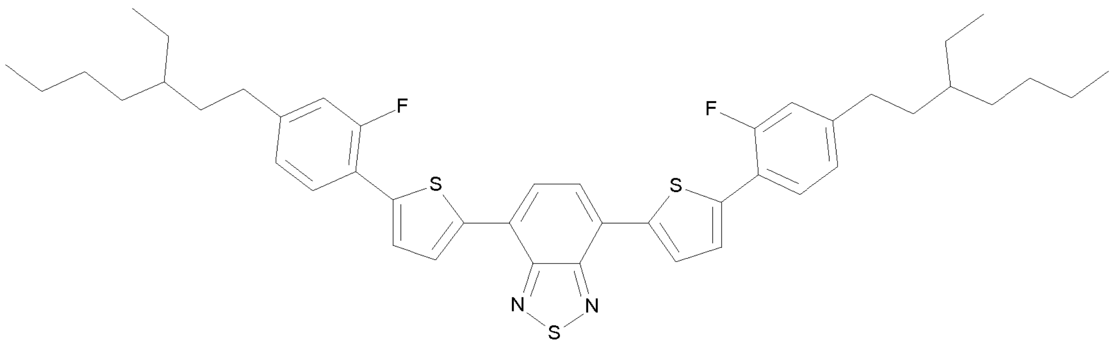 | |
| 17 | |

(fortgesetzt)

| |
|---|
| 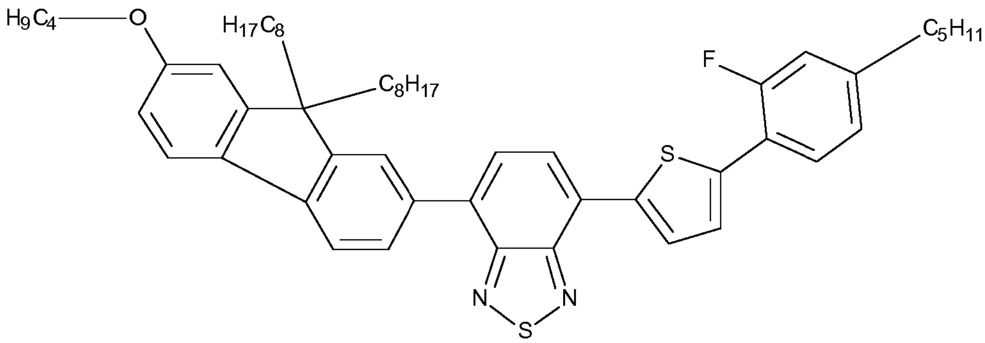 |
| 18 |
| 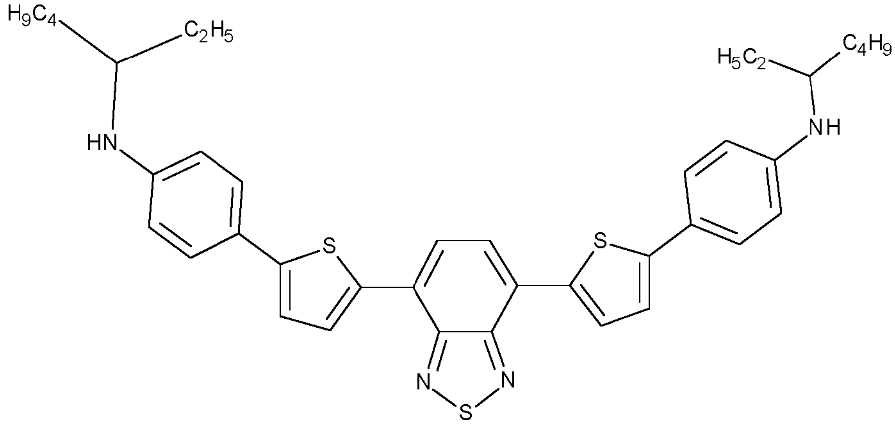 |
| 19 |
| 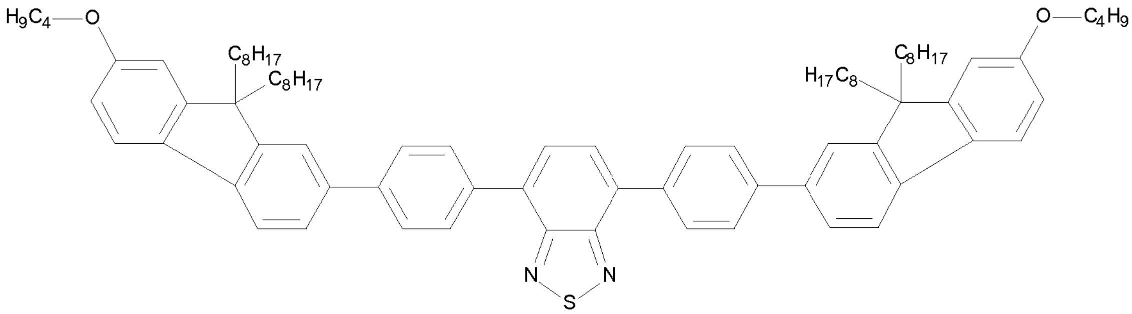 |
| 20 |
| 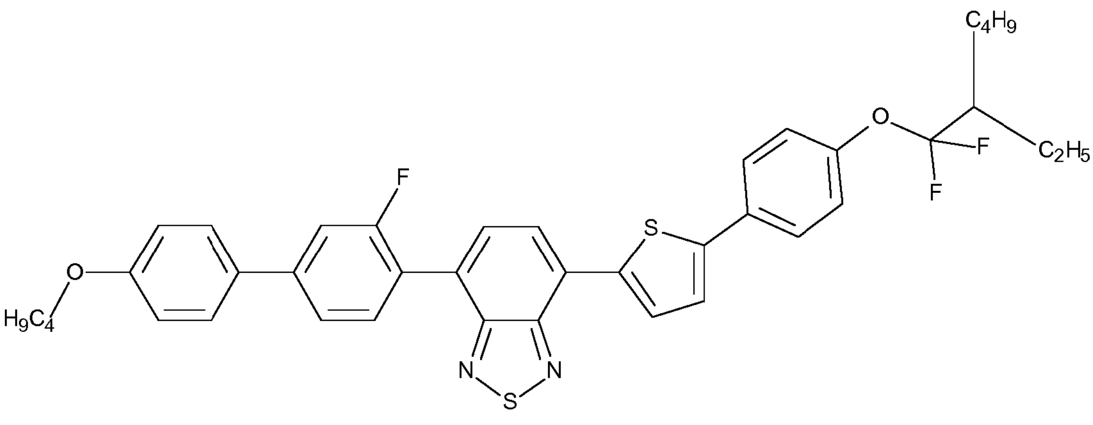 |
| 21 |

(fortgesetzt)

| |
|---|
| 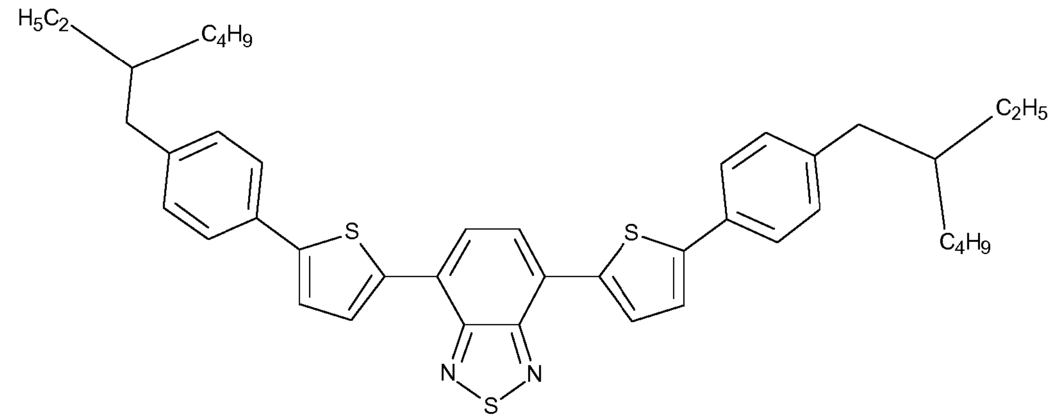 |
| 22 |
| 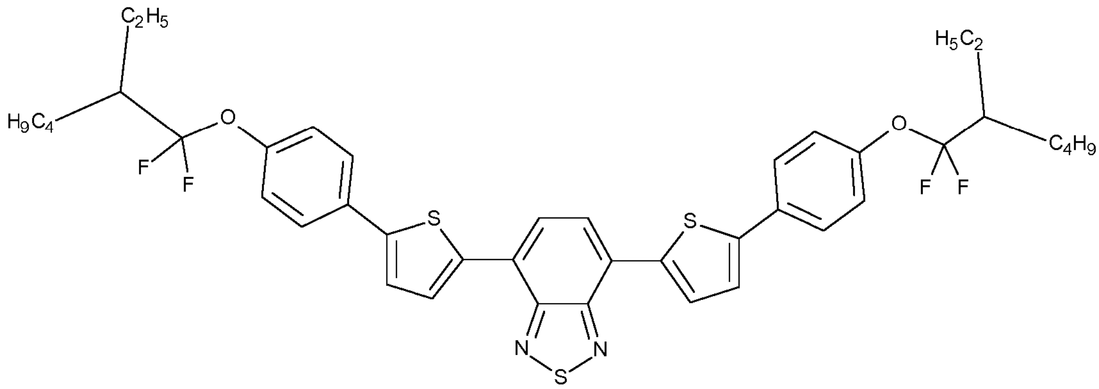 |
| 23 |
| 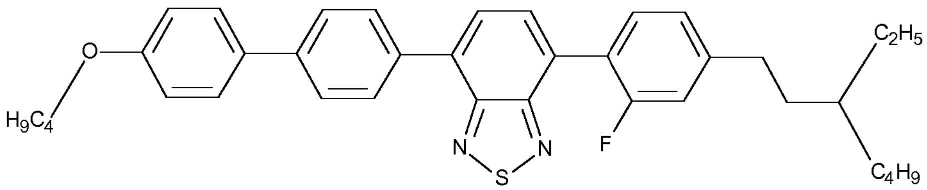 |
| 24 |
| 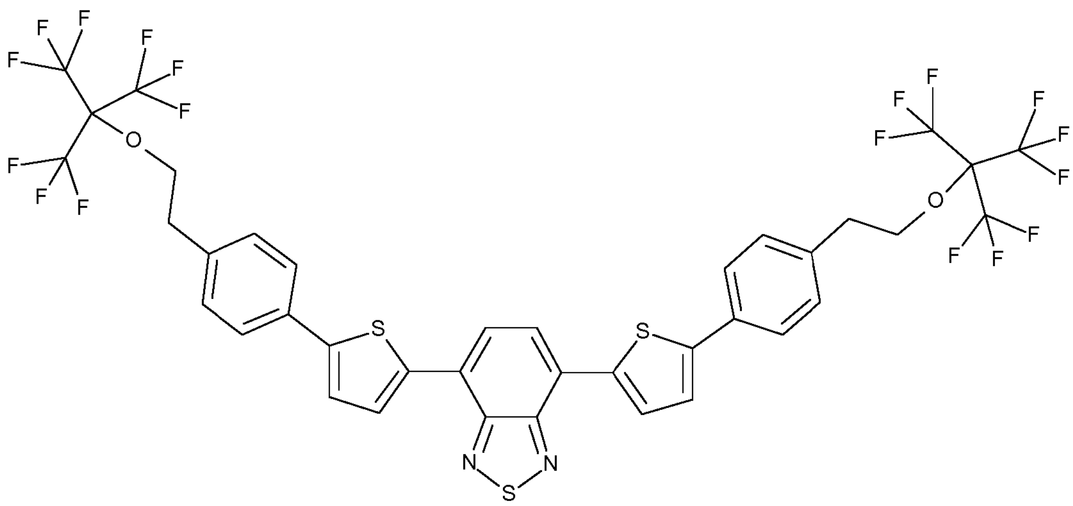 |
| 25 |

(fortgesetzt)

| |
|---|
| 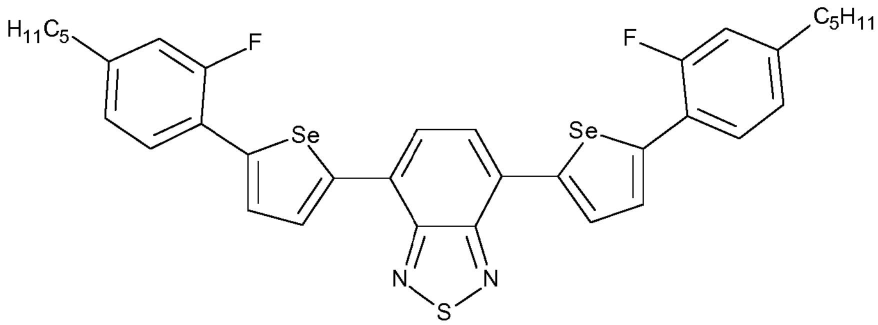 |
| 26 |
| 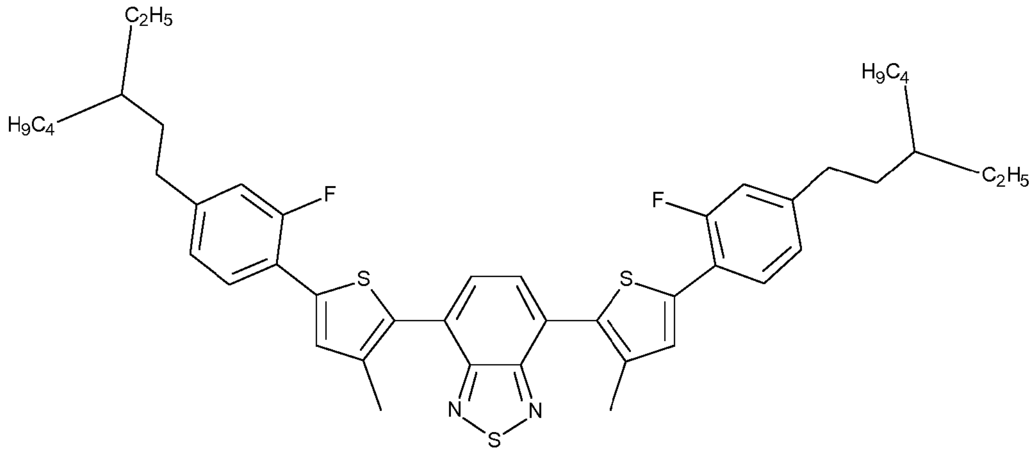 |
| 27 |
| 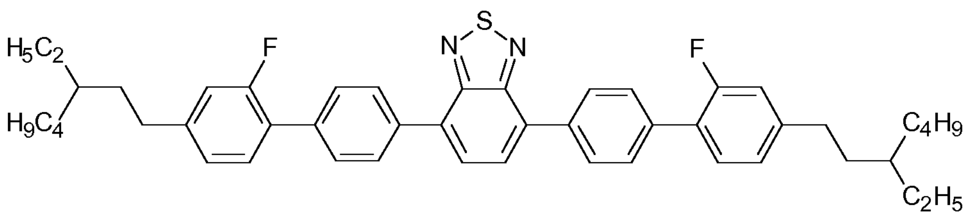 |
| 28 |
| 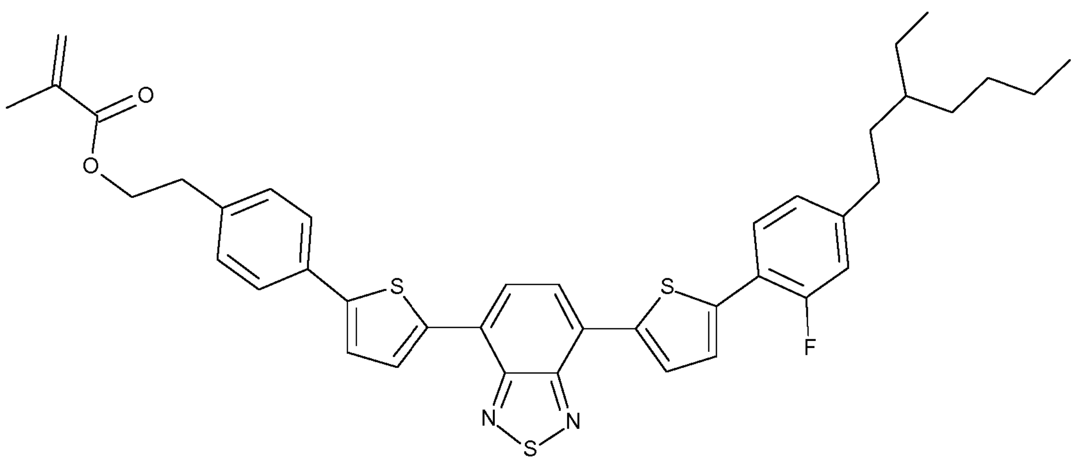 |
| 29 |

(fortgesetzt)

| |
|---|
| 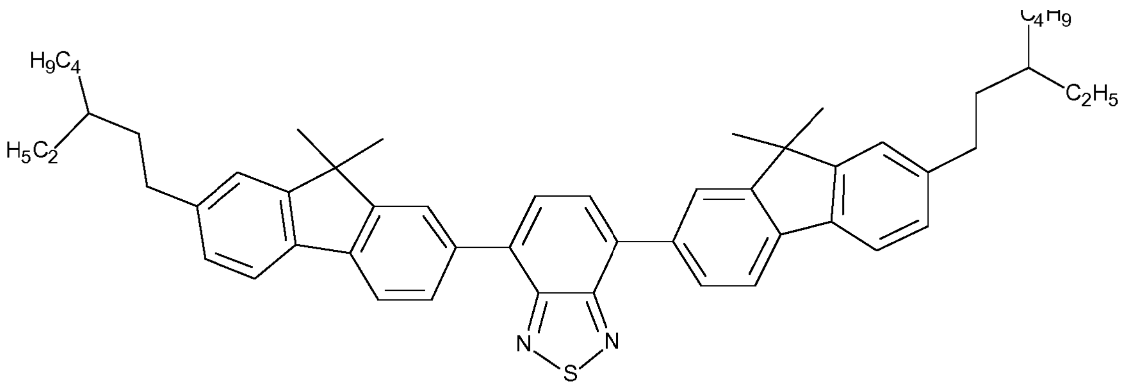 |
| 30 |
| 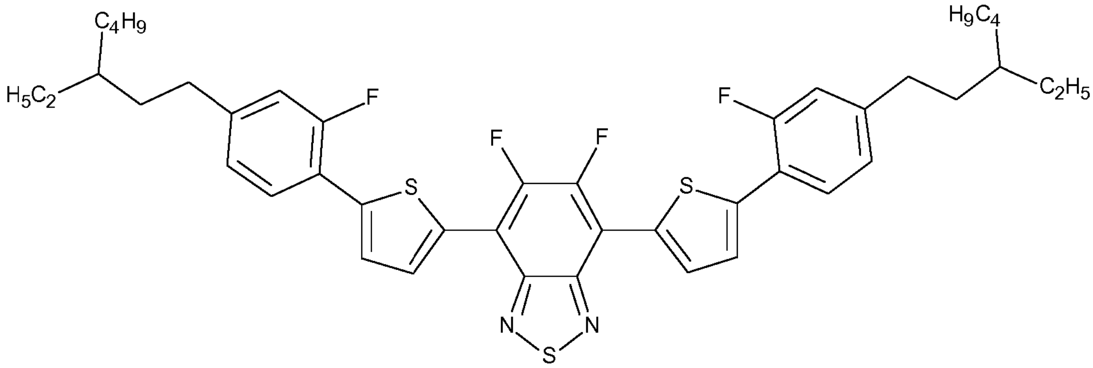 |
| 31 |
| 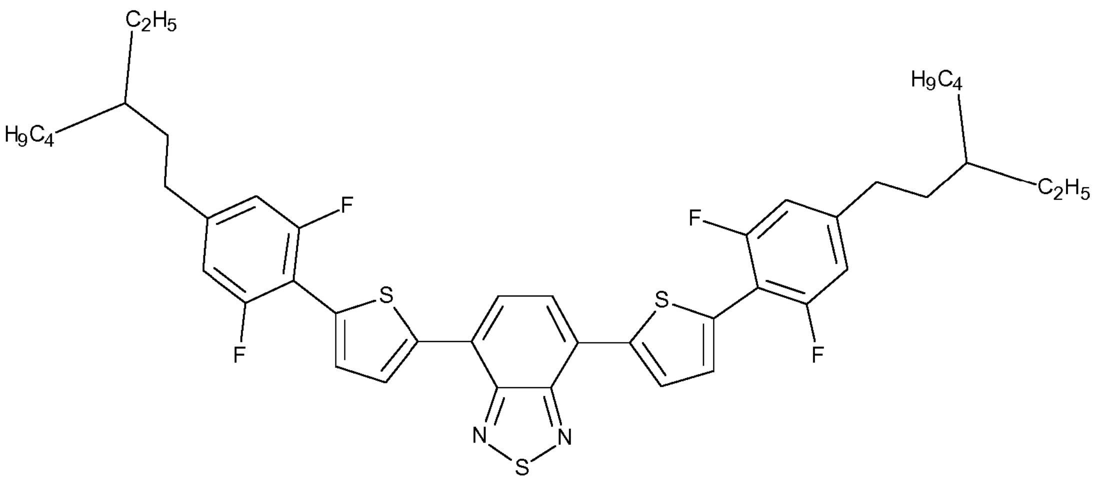 |
| 32 |

(fortgesetzt)

| |
|---|
| 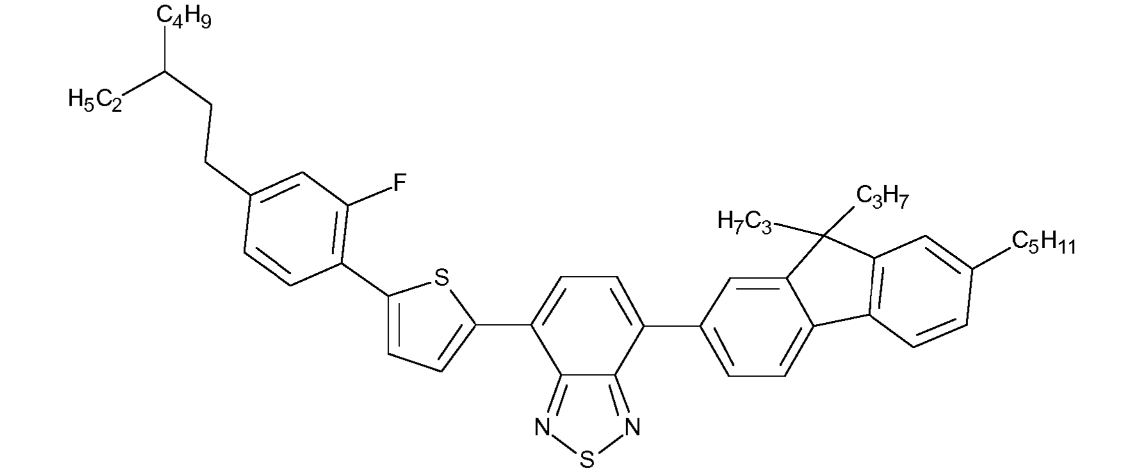 |
| 33 |
| 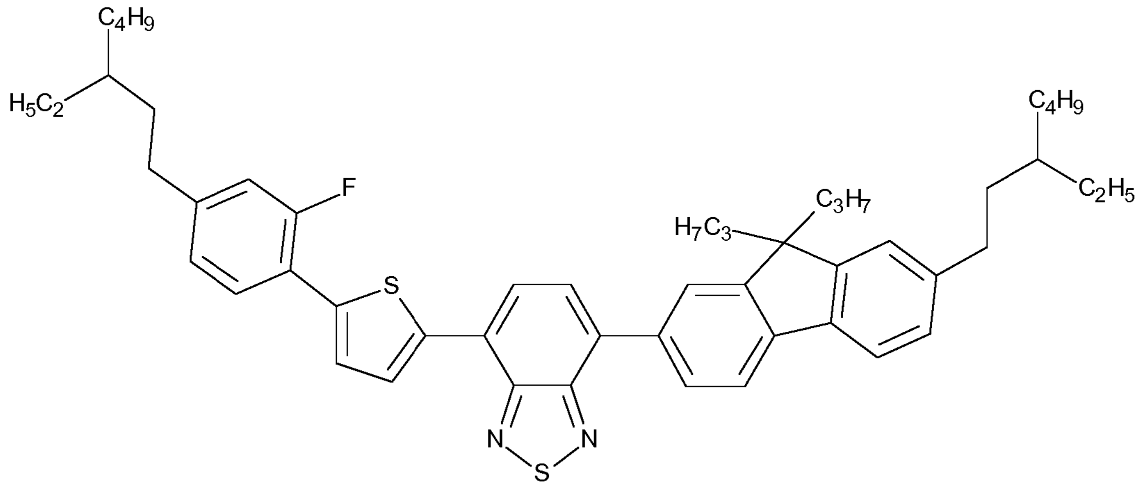 |
| 34 |
| 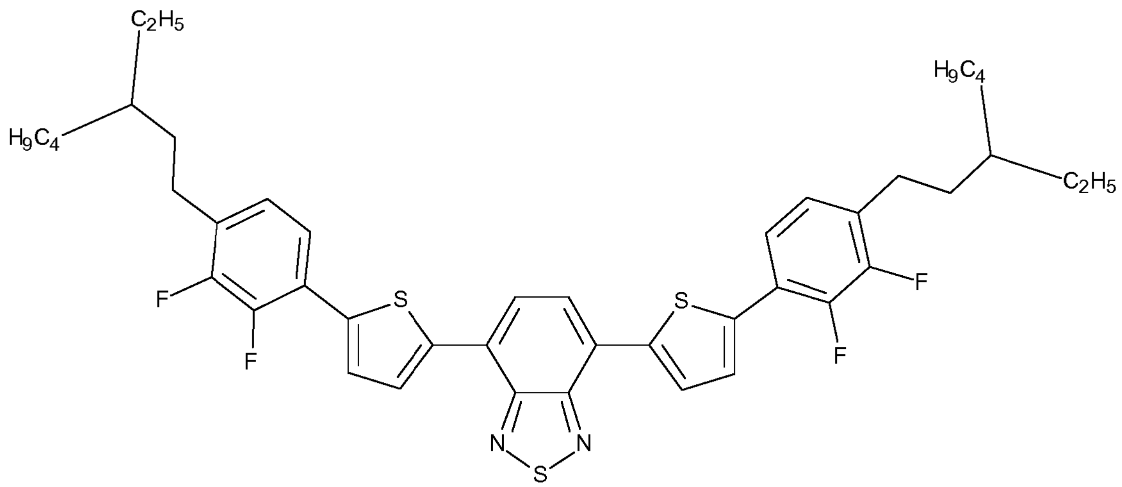 |
| 35 |

(fortgesetzt)

| |
|---|
| 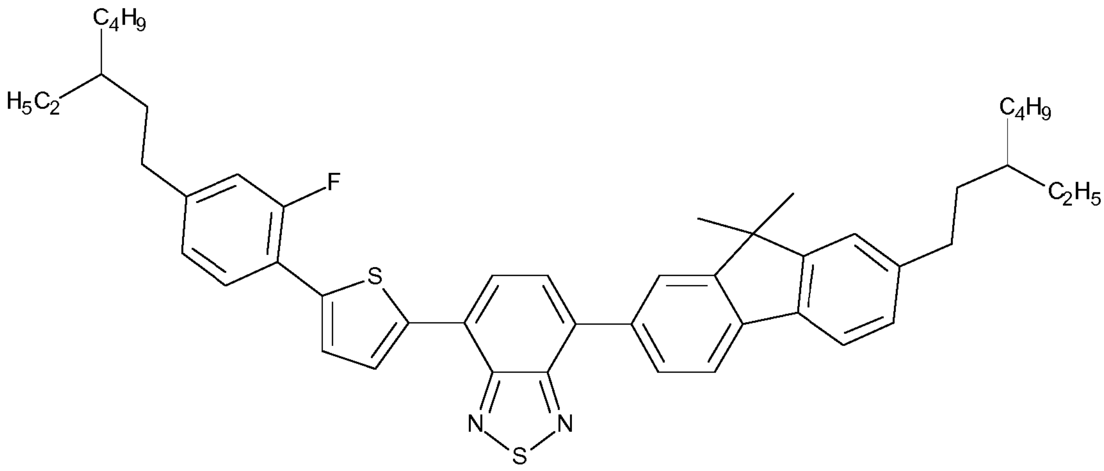 |
| 36 |
| 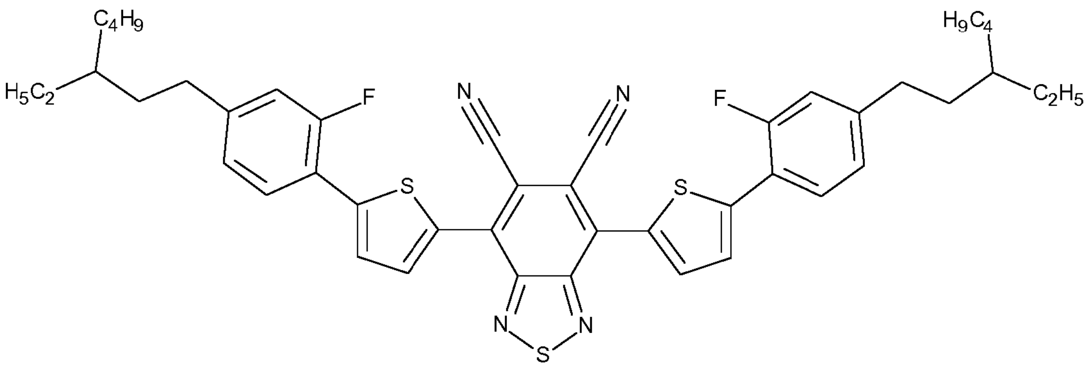 |
| 37 |
| 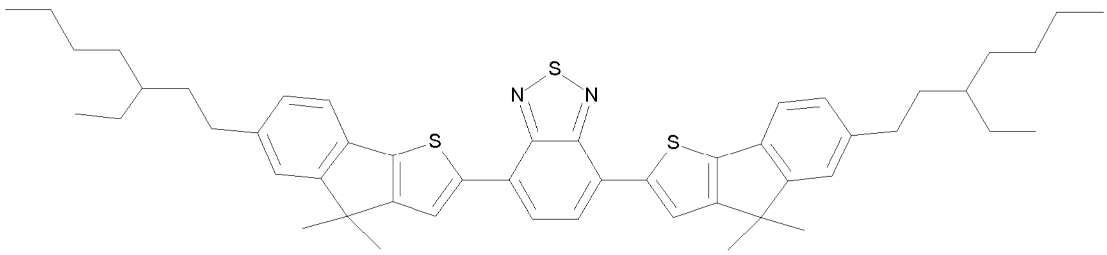 |
| 38 |
| 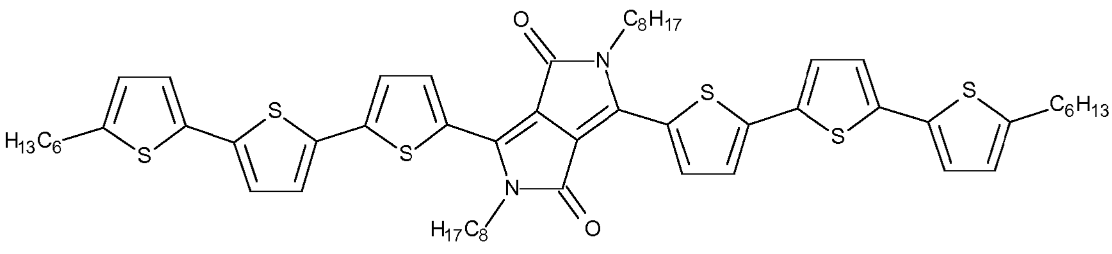 |
| 39 |

(fortgesetzt)

| |
|---|
| 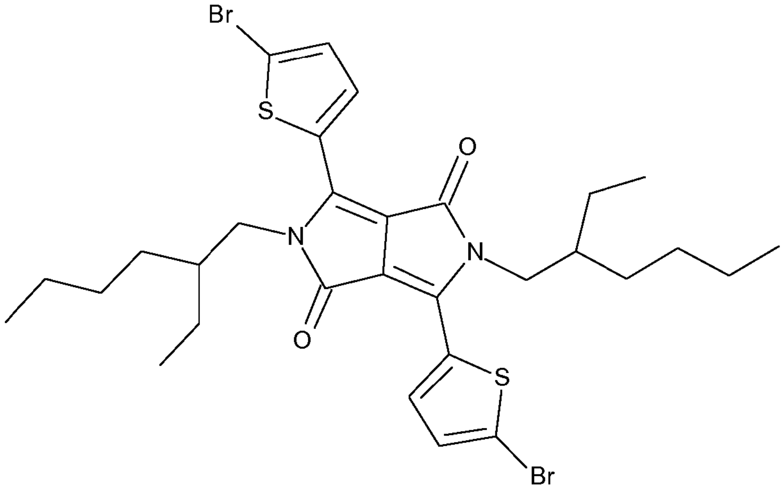 |
| 40 |
| 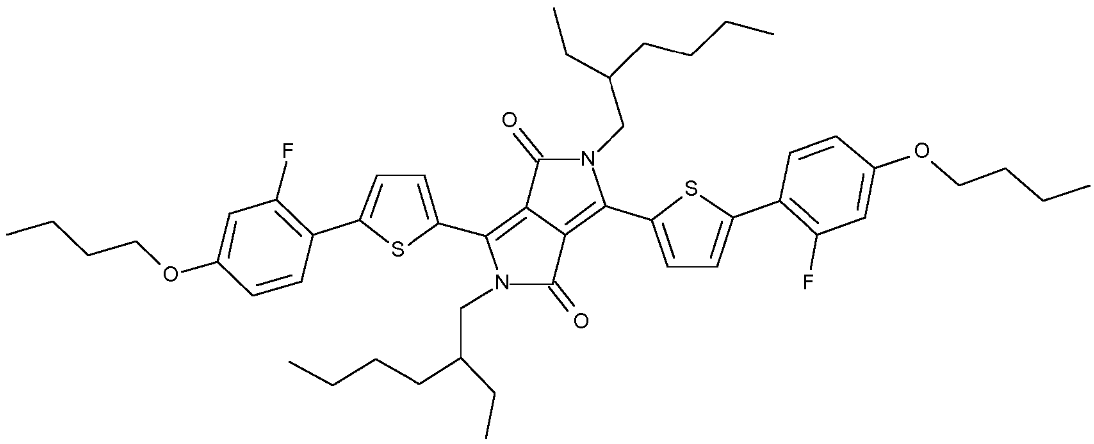 |
| 41 |
| 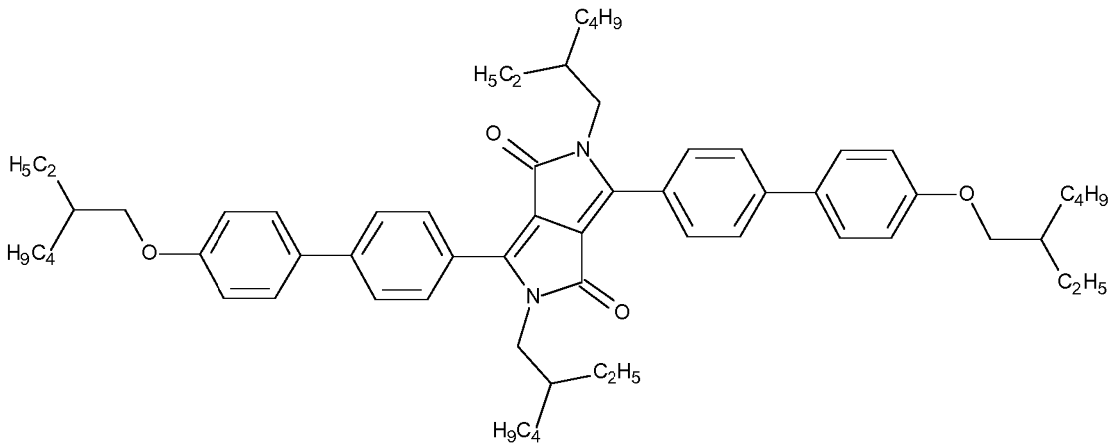 |
| 42 |

(fortgesetzt)

| |
|---|
| 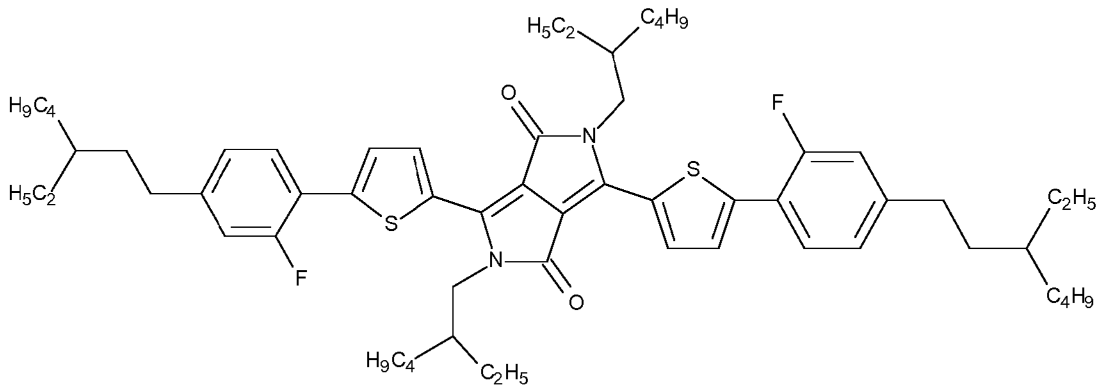 |
| 43 |
| 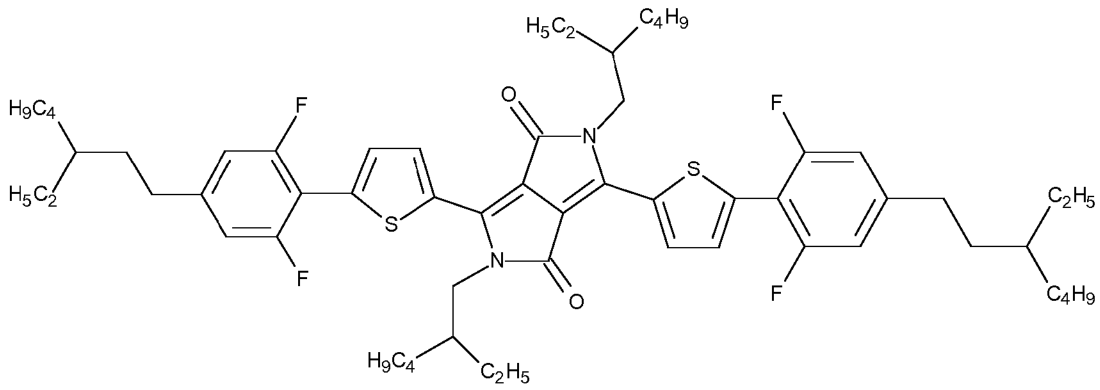 |
| 44 |
| 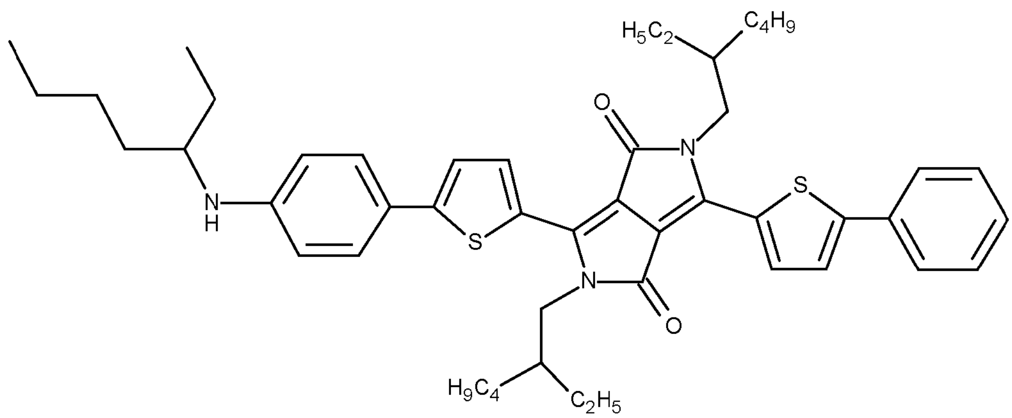 |
| 45 |
| 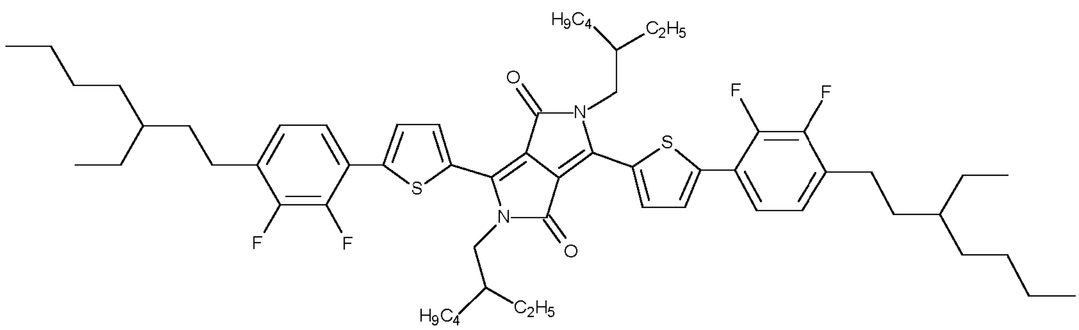 |

(fortgesetzt)

| 46 |
|---|
| 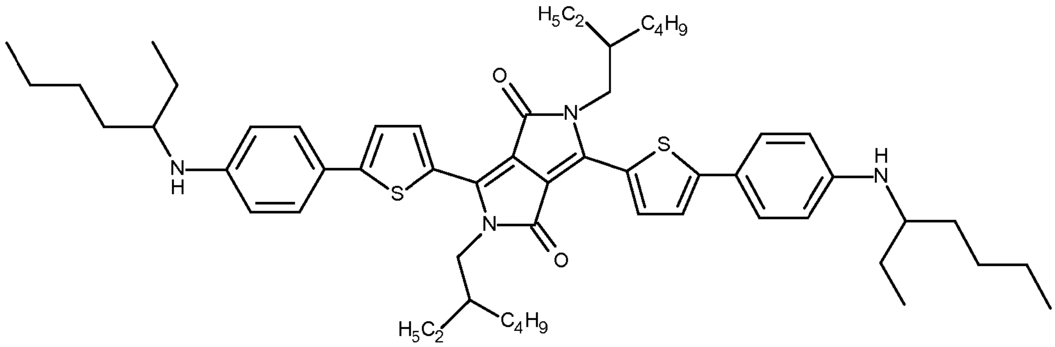 |
| 47 |
| 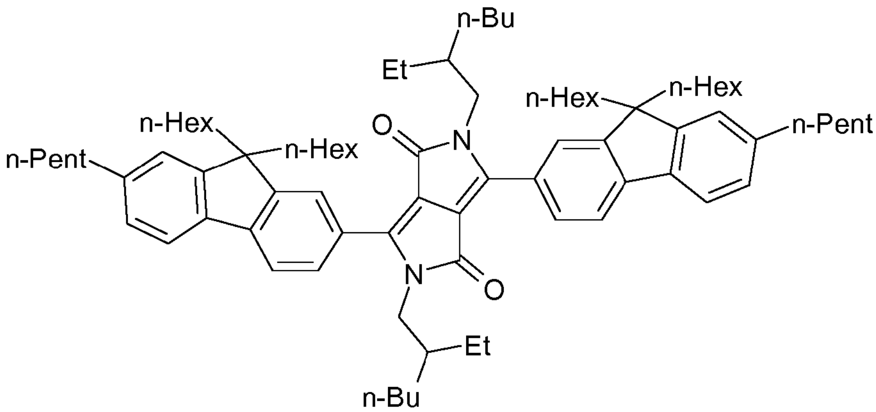 |
| 48 |
| 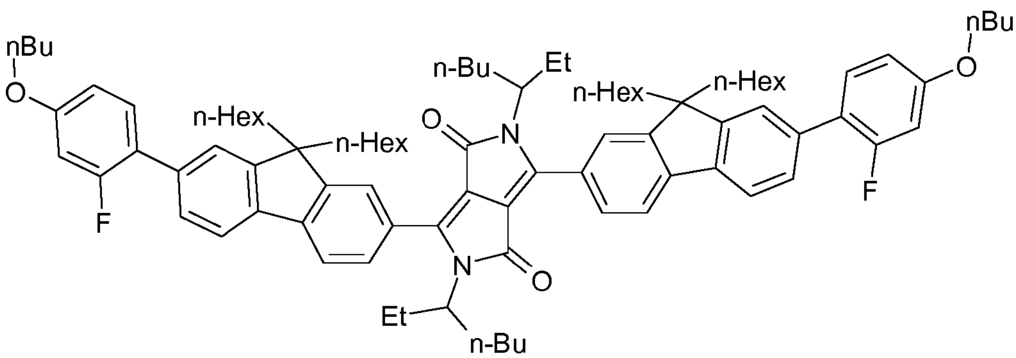 |
| 49 |
| 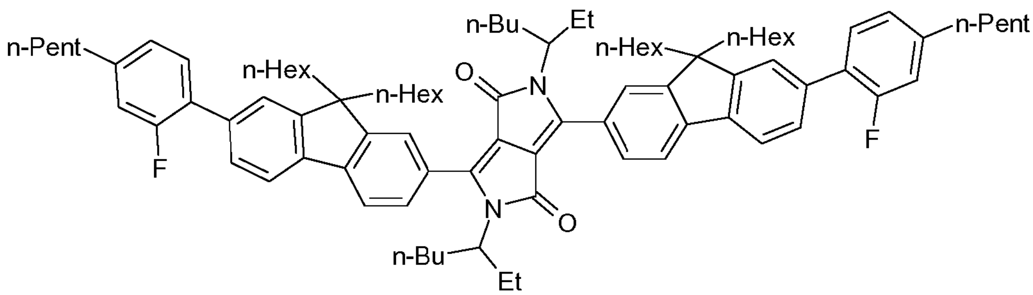 |
| 50 |

(fortgesetzt)

| |
|---|
| 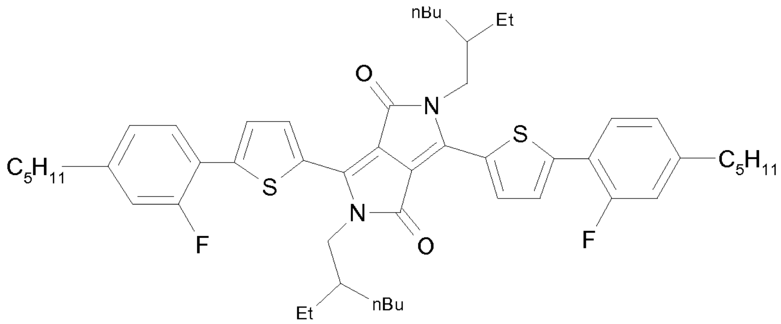 |
| 51 |
| 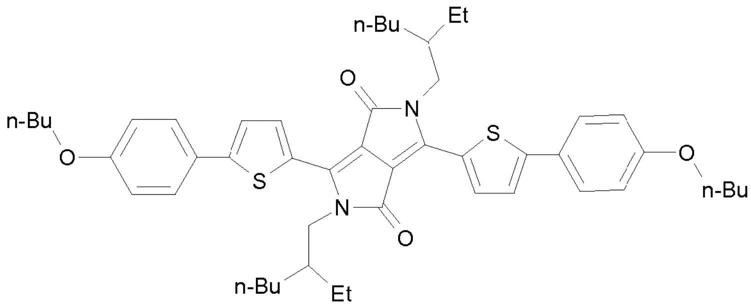 |
| 52 |
| 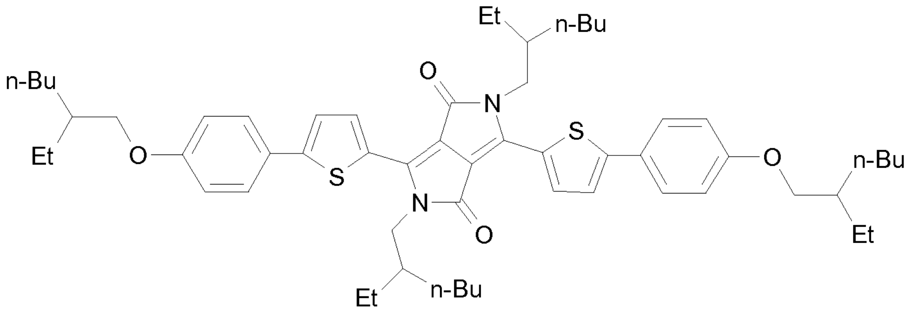 |
| 53 |
| 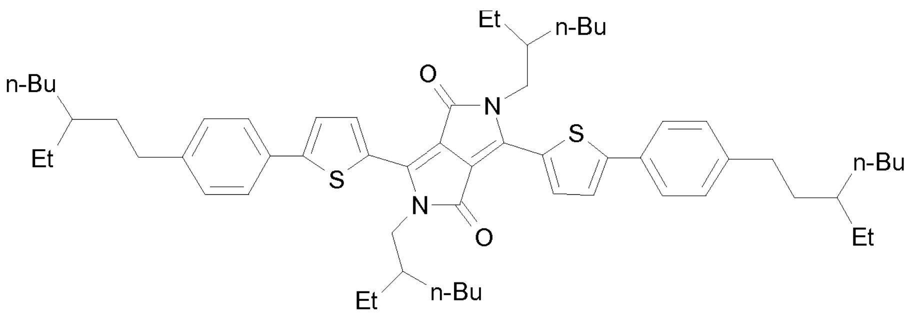 |
| 54 |

(fortgesetzt)

| |
|---|
| 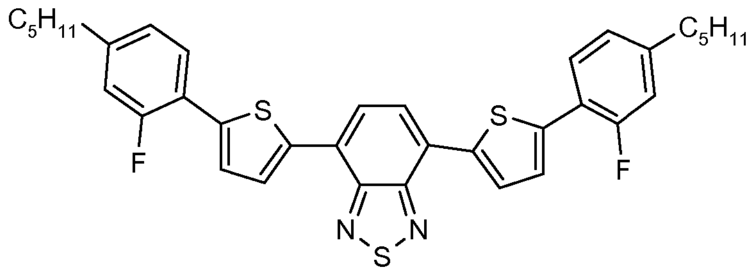 |
| 55 |
| 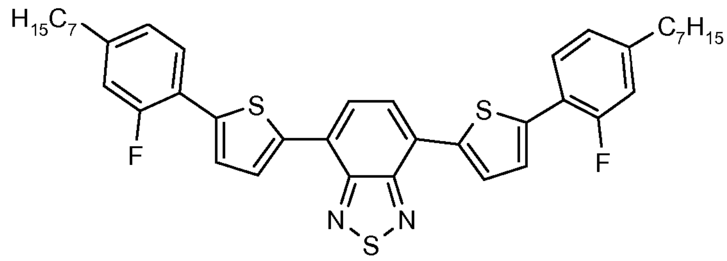 |
| 56 |
| 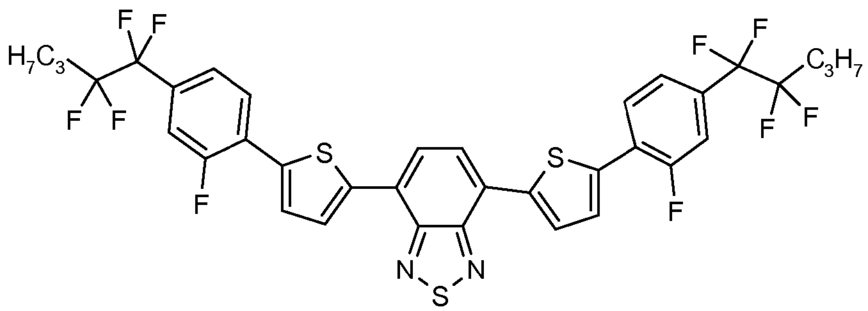 |
| 57 |
| 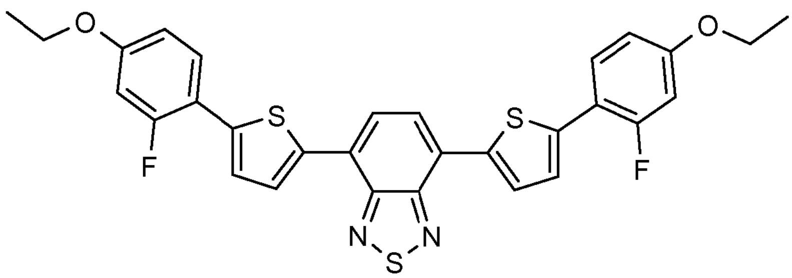 |
| 58 |
| 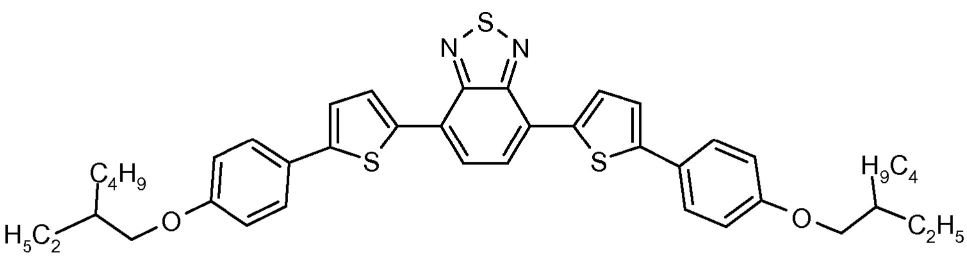 |
| 59 |

(fortgesetzt)

| |
|---|
| 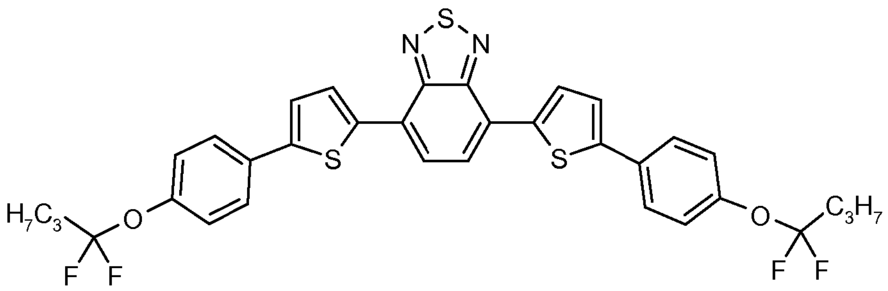 |
| 60 |
| 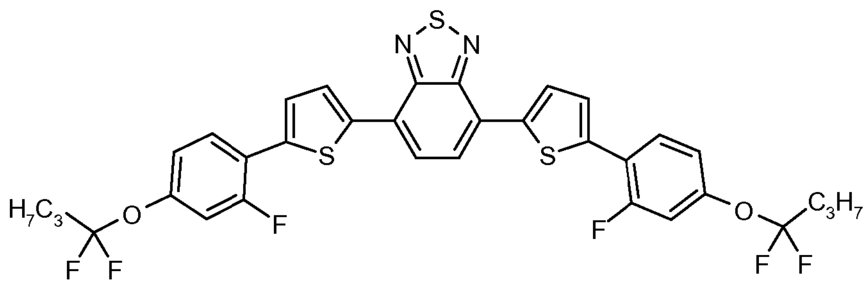 |
| 61 |
| 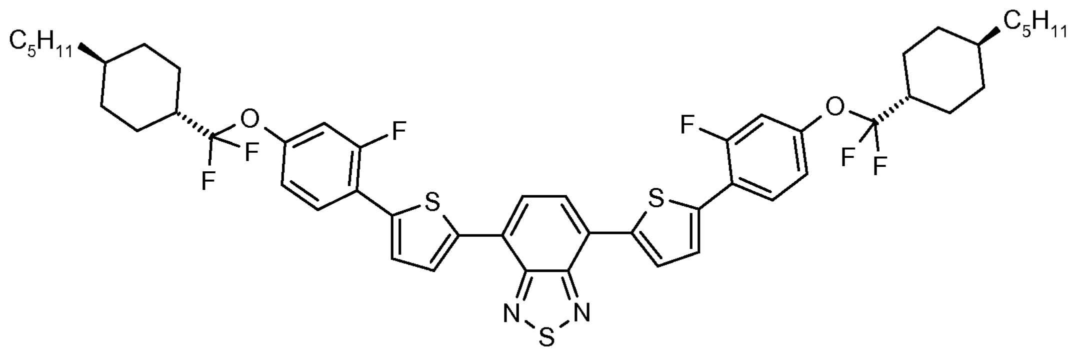 |
| 62 |
| 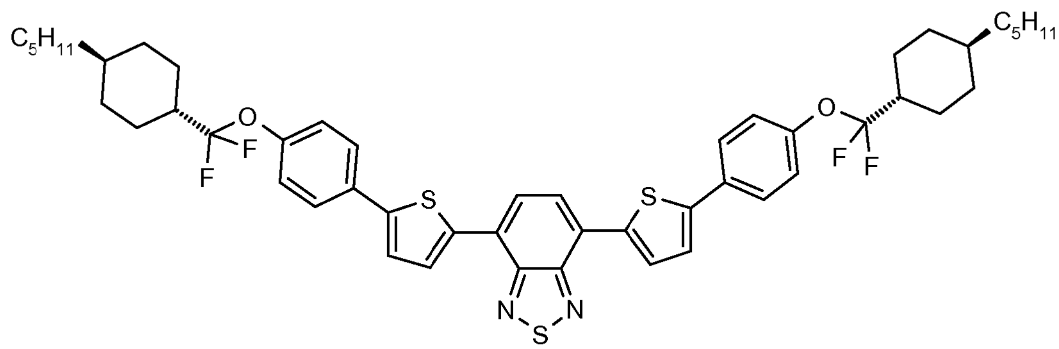 |
| 63 |
| 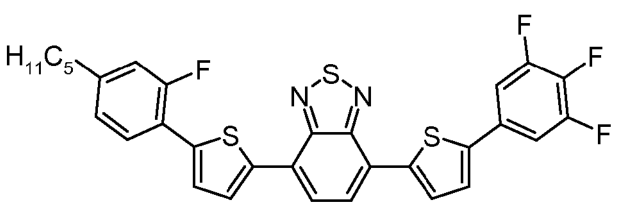 |

(fortgesetzt)

| |
|---|
| 64 |
| 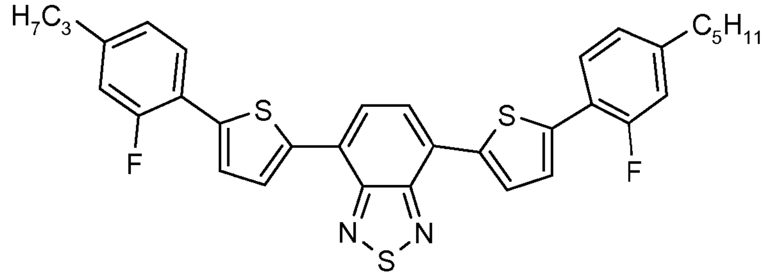 |
| 65 |
| 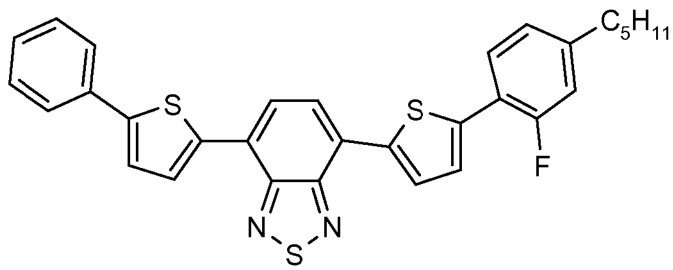 |
| 66 |
| 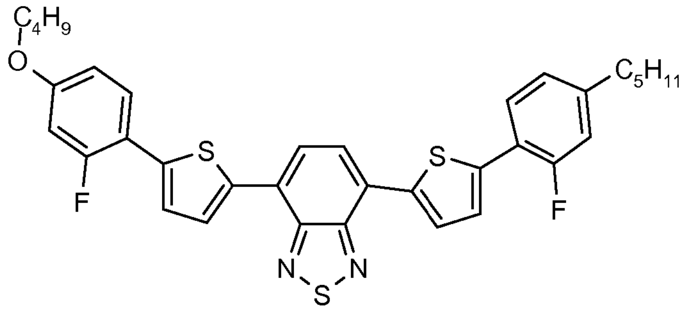 |
| 67 |
| 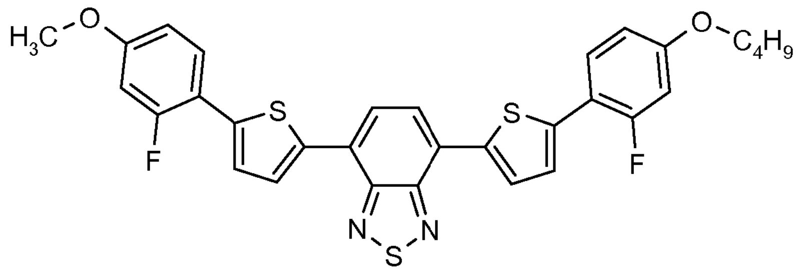 |
| 68 |
| 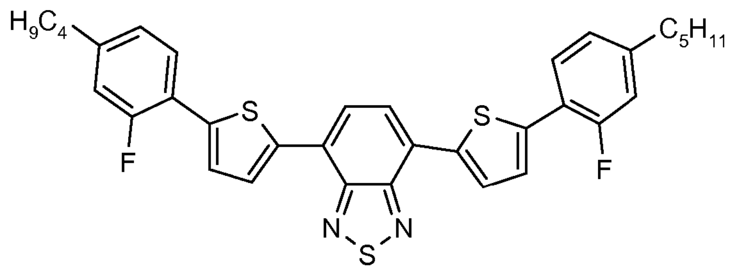 |
| 69 |

(fortgesetzt)

| |
|---|
| 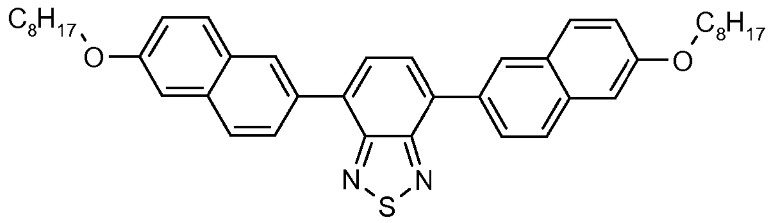 |
| 70 |
| 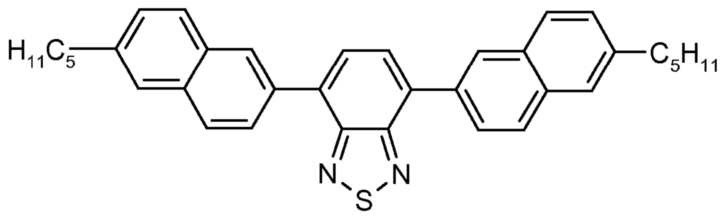 |
| 71 |
| 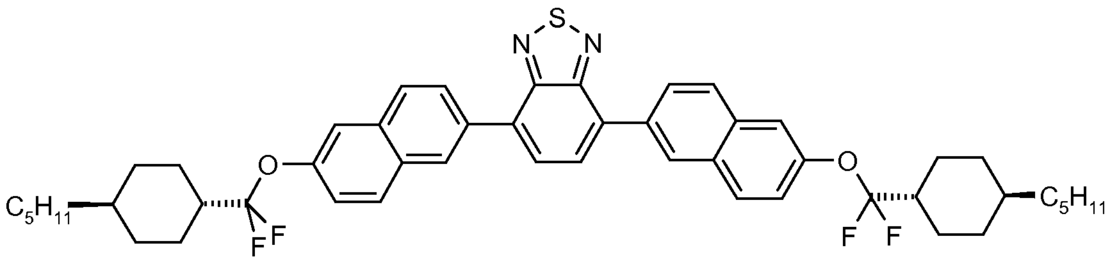 |
| 72 |
| 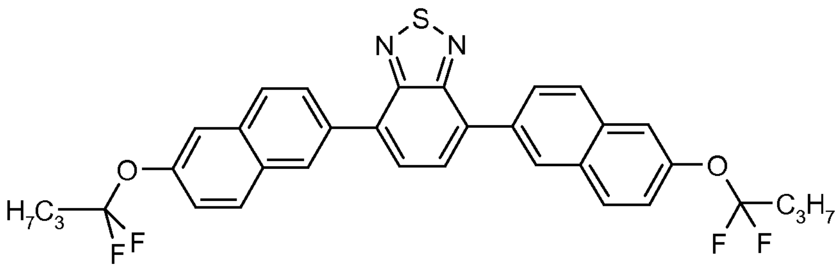 |
| 73 |
| 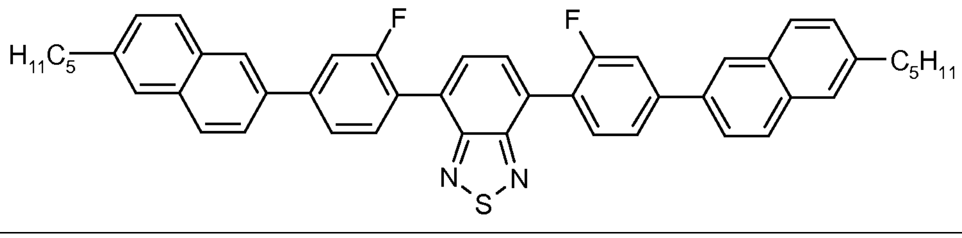 |
| 74 |
| 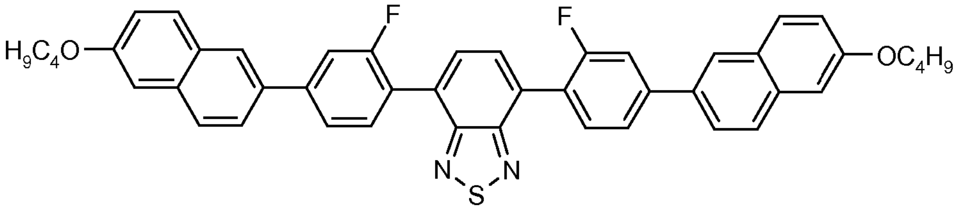 |

(fortgesetzt)

| |
|---|
| 75 |
| 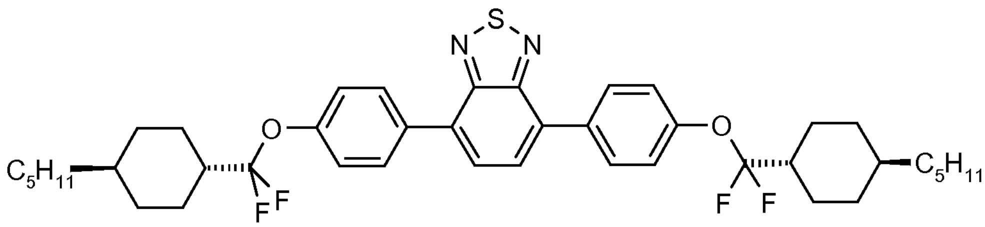 |
| 76 |
| 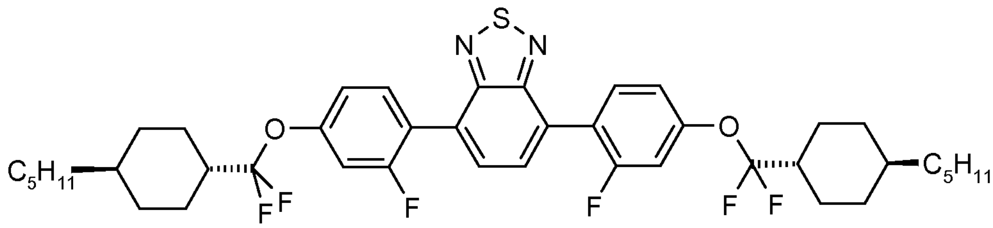 |
| 77 |
| 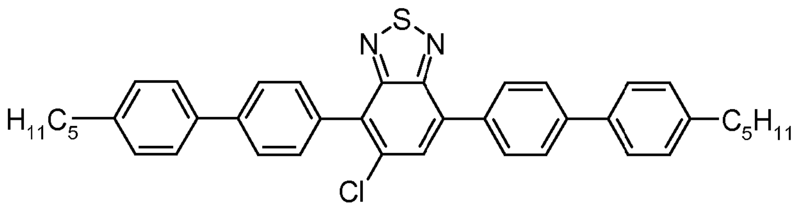 |
| 78 |
| 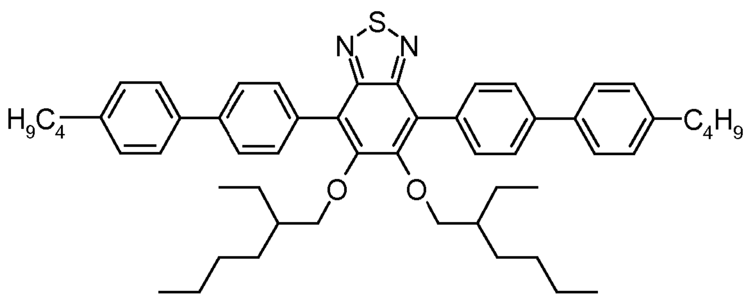 |
| 79 |
| 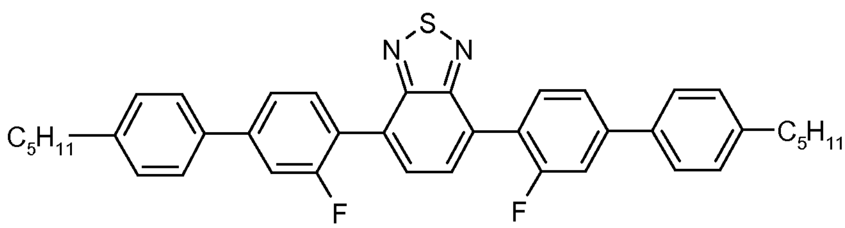 |
| 80 |

(fortgesetzt)

| |
|---|
| 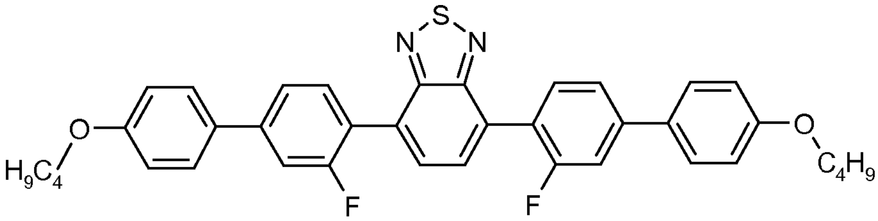 |
| 81 |
| 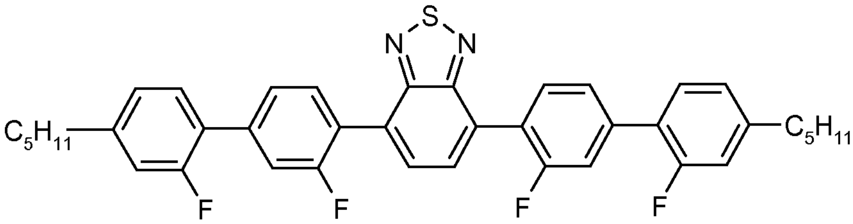 |
| 82 |
| 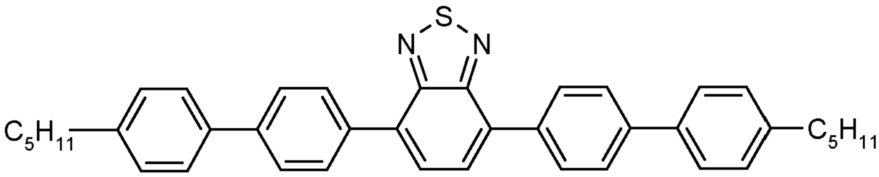 |
| 83 |
| 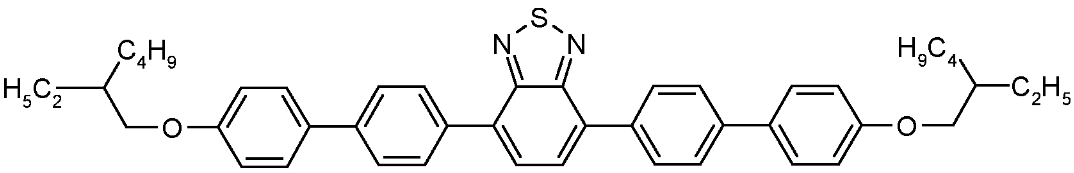 |
| 84 |
| 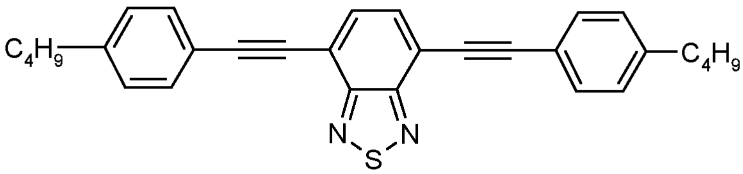 |
| 85 |
| 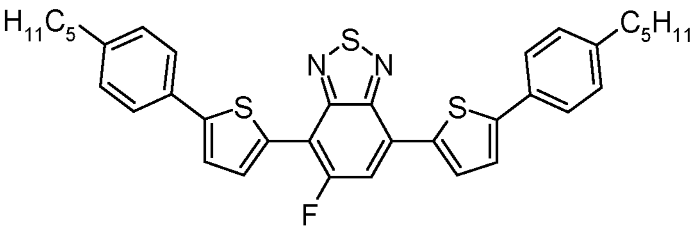 |
| 89 |

(fortgesetzt)

| |
|---|
| 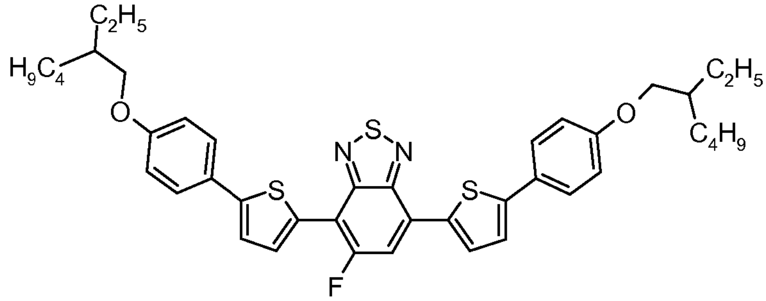 |
| 90 |
| 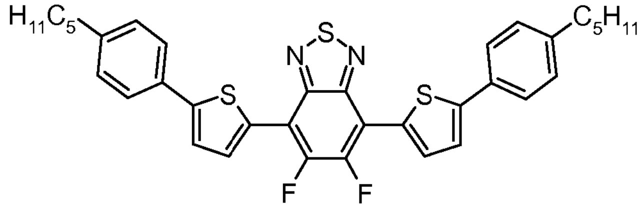 |
| 91 |
| 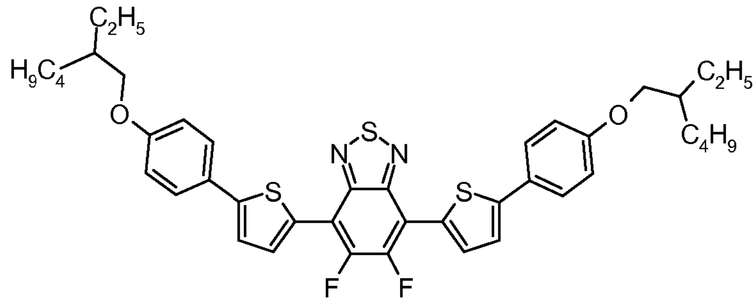 |
| 92 |
| 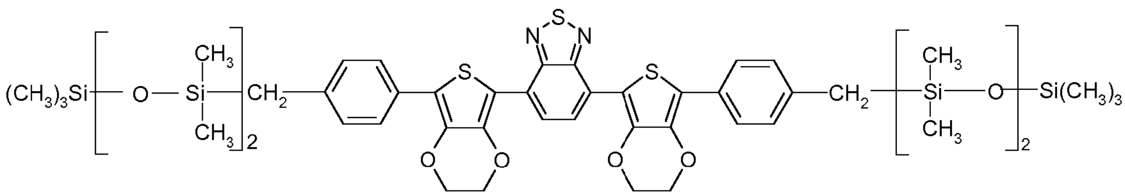 |
| 93 |
| 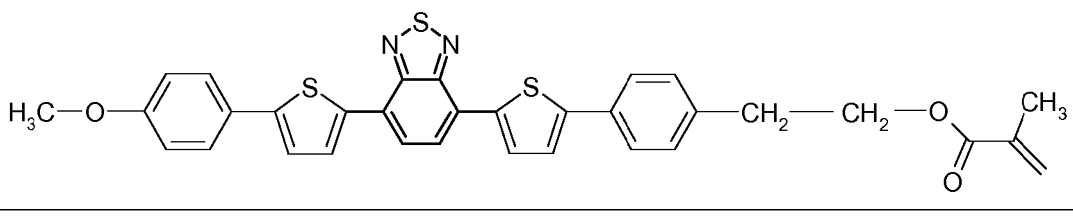 |
| 94 |
| 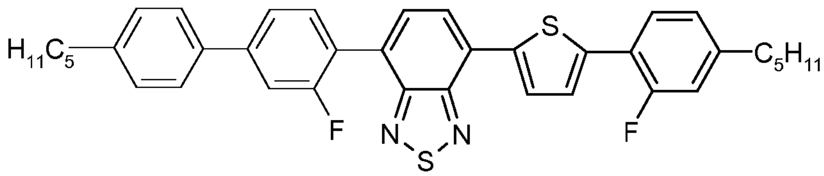 |

(fortgesetzt)

| |
|---|
| 95 |
| 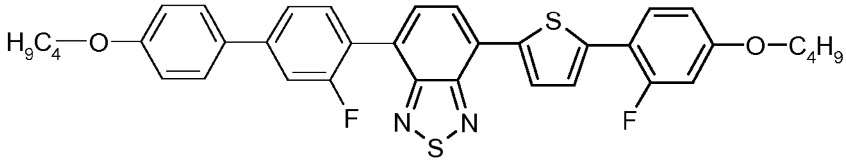 |
| 96 |
| 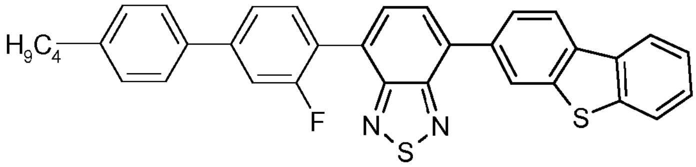 |
| 97 |
| 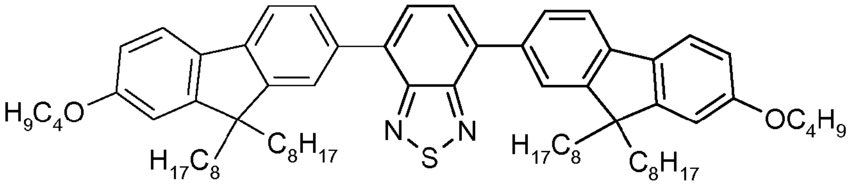 |
| 98 |
| 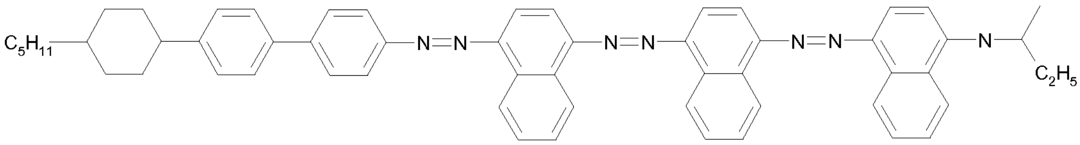 |
| 99 |
| 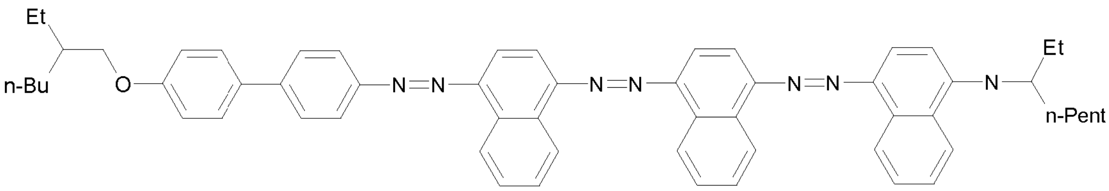 |
| 100 |
| 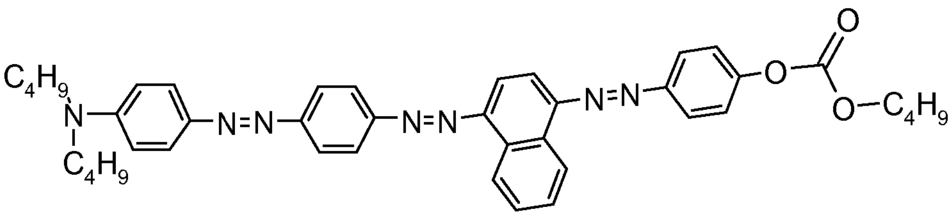 |
| 101 |
| 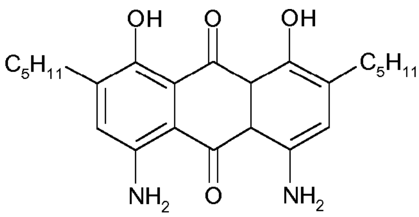 |

(fortgesetzt)

| |
|---|
| 102 |
| 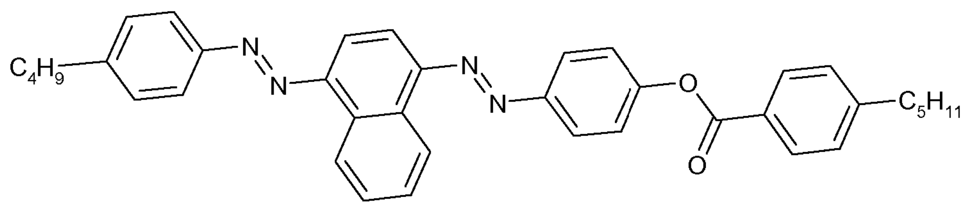 |
| 103 |
| 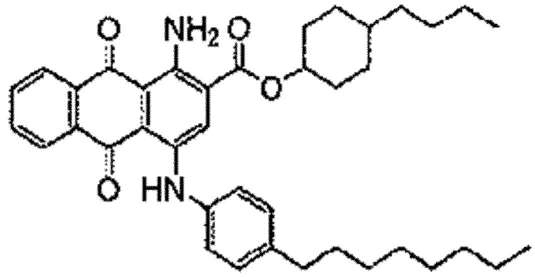 |
| 104 |
| 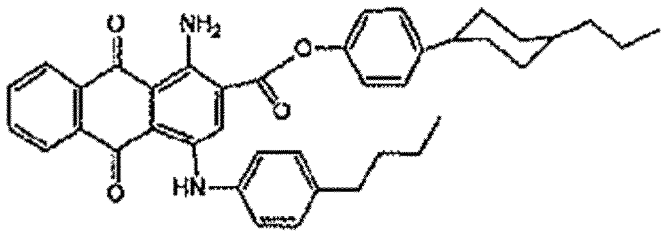 |
| 105 |
| 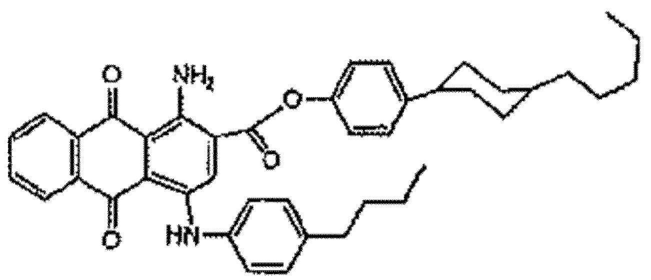 |
| 106 |

Das flüssigkristalline Material der Schaltschicht ist bevorzugt bei Betriebstemperatur der Vorrichtung nematisch flüssigkristallin. Besonders bevorzugt ist es in einer Spanne von +-20 °C, ganz besonders bevorzugt in einer Spanne von +-30 °C über- und unterhalb der Betriebstemperatur der Vorrichtung nematisch flüssigkristallin. Erfindungsgemäß hat das flüssigkristalline Material einen Klärpunkt, bevorzugt einen Phasenübergang von einem nematisch flüssigkristallinen Zustand zu einem isotropen Zustand, oberhalb von 80 °C, bevorzugt oberhalb von 100 °C, besonders bevorzugt oberhalb von 120 °C, und am stärksten bevorzugt oberhalb von 130 °C.

Weiterhin bevorzugt umfasst das flüssigkristalline Material 3 bis 30 verschiedene Verbindungen, bevorzugt 6 bis 20, besonders bevorzugt 8 bis 18 verschiedene Verbindungen.

Weiterhin bevorzugt hat das flüssigkristalline Material eine optische Anisotropie ($\Delta n$) von 0,01 bis 0,3, besonders bevorzugt von 0,04 bis 0,27. Ebenfalls bevorzugt hat das flüssigkristalline Material eine dielektrische Anisotropie $\Delta\varepsilon$ von 2 bis 70 oder von -1,5 bis -10.

Verbindungen, welche als Bestandteile des flüssigkristallinen Materials verwendet werden können, sind dem Fachmann bekannt und können grundsätzlich beliebig gewählt werden. Es ist bevorzugt, dass das flüssigkristalline

Material mindestens eine Verbindung enthält, welche Strukturelemente basierend auf 1,4-Phenylenen und 1,4-Cyclohexylenen aufweist. Besonders bevorzugt ist es, dass das flüssigkristalline Material mindestens eine Verbindung enthält, welche 2, 3 oder 4, besonders bevorzugt 3 oder 4 Strukturelemente basierend auf 1,4-Phenylenen und 1,4-Cyclohexylenen aufweist. Erfindungsgemäß enthält das flüssigkristalline Material eine Verbindung einer Formel (I)

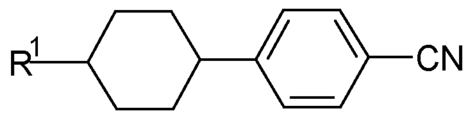

Formel (I),

wobei $R^1$ gewählt ist aus Alkylgruppen mit 1 bis 10 C-Atomen.

Die Substratschichten sind bevorzugt aus Glas oder Polymer gebildet, besonders bevorzugt aus Polymer. Bevorzugt sind Polymere mit geringer Doppelbrechung, insbesondere in der Substratschicht, die an den Polarisator angrenzt. Bevorzugte Polymermaterialien für die Substratschicht sind PMMA, Polycarbonat, PET, PEN, COP oder PVB. Die Verwendung von Substratschichten aus Polymermaterial hat den Vorteil, dass gebogene Substratschichten ohne größeren Aufwand hergestellt werden können und weniger Spannungsdoppelbrechung aufweisen als entsprechend gebogene Glasschichten. Weiterhin können Substratschichten aus Polymermaterial mit sehr effizienten UV-Filtern ausgestattet werden, die das flüssigkristalline Material und den dichroitischen Farbstoff vor UV-Licht und dadurch verursachter Zersetzung schützen.

Bevorzugt sind die Substratschichten der erfindungsgemäßen Vorrichtung aus Polymer, bevorzugt aus optisch isotropem Polymer. Besonders bevorzugt sind Substratschichten, die in der Vorrichtung an den Polarisator angrenzen, aus Polymer, bevorzugt aus optisch isotropem Polymer. Bevorzugt weisen die genannten Substratschichten keine oder nur eine geringe Spannungsdoppelbrechung auf. Dies ist insbesondere mit Substratschichten aus Polymer erreichbar. Dem Fachmann sind optisch isotrope Materialien, die als Substratschichten verwendet werden können, bekannt. Bevorzugt ist die Verwendung von optisch isotropen Polymeren, die keine oder nur eine geringe Retardation aufweisen, als optisch isotrope Substratschichten in der erfindungsgemäßen Vorrichtung. Optisch isotrop bedeutet im Zusammenhang mit Substratschichten der Vorrichtung die weitgehende, bevorzugt vollständige Abwesenheit von Doppelbrechung, wobei Spannungsdoppelbrechung vom Begriff Doppelbrechung umfasst ist.

Es ist bevorzugt, dass sich zwischen Polarisationsschicht und der von der Schaltschicht aus betrachtet nächstliegenden Substratschicht eine oder mehrere weitere Schichten befinden. Bevorzugt kompensieren diese Schichten die unterschiedlichen thermischen Ausdehnungskoeffizienten von Polarisationsschicht und Substratschicht. Bevorzugt sind dafür Schichten gewählt aus Klebstoffschichten und Klebefilmen, beispielsweise Optically Clear Adhesive von 3M oder PVB (Polyvinylbutyral), oder EVA (Ethylenvinylacetat).

Die optische Schaltvorrichtung kann in Anzeigevorrichtungen (Displays) oder in schaltbaren Fenstern verwendet werden. Unter einem schaltbaren Fenster wird dabei eine Vorrichtung zur homogenen Regulierung des Lichtdurchtritts durch ein Flächenelement, insbesondere zur Regulierung des Durchtritts von Sonnenlicht, verstanden. Unter homogener Regulierung wird dabei verstanden, dass die Transmission an allen Stellen innerhalb des Flächenelements weitgehend gleich hoch ist.

Das Flächenelement hat dabei bevorzugt eine Ausdehnung von mindestens 0.05 $m^2$, besonders bevorzugt mindestens 0.1 $m^2$, besonders bevorzugt mindestens 0.2 $m^2$. Bei der Verwendung in Fenstern von Gebäuden sind noch größere Flächenelemente bevorzugt, mindestens 0.5 $m^2$, besonders bevorzugt mindestens 0.8 $m^2$.

Die erfindungsgemäße Vorrichtung ist bevorzugt zur Regulierung des Lichtdurchtritts in Form von Sonnenlicht von der Umgebung in einen Raum hinein geeignet. Der Raum kann dabei ein beliebiger weitgehend von der Umgebung abgeschlossener Raum sein, beispielsweise ein Gebäude, ein Fahrzeug, oder ein Container. Die Vorrichtung kann allgemein für beliebige Räume verwendet werden, besonders wenn diese nur begrenzten Luftaustausch mit der Umgebung aufweisen und lichtdurchlässige Begrenzungsflächen aufweisen, durch die Energie-Eintrag von außen in Form von Lichtenergie stattfinden kann. Besonders bevorzugt ist die Verwendung der Vorrichtung für Räume, welche starker Sonneneinstrahlung durch lichtdurchlässige Flächen, beispielsweise durch Fensterflächen, ausgesetzt sind. Beispiele hierfür sind Räume mit großen Fensterflächen nach außen und die Innenräume von Fahrzeugen, beispielsweise von Kraftfahrzeugen, Schiffen oder Flugzeugen, insbesondere von Autos. Bei der Verwendung in Autos ist die Verwendung im Dachbereich, insbesondere in Schiebedächern und Panoramadächern, bevorzugt.

Die erfindungsgemäße Vorrichtung ist bevorzugt in einer Öffnung einer größeren flächigen Struktur angeordnet, wobei die flächige Struktur selbst nicht oder nur geringfügig Lichtdurchtritt zulässt, und wobei die Öffnung relativ gesehen lichtdurchlässiger ist. Bevorzugt ist die flächige Struktur eine Wand oder eine sonstige Begrenzung eines Raums nach außen.

Bevorzugt enthält erfindungsgemäße Vorrichtung ein Lichtleitsystem, das Licht zu einer Solarzelle oder einer

sonstigen Vorrichtung zur Umwandlung von Licht und/oder Wärmeenergie in elektrische Energie leitet, bevorzugt wie in WO 2009/141295 beschrieben.

Die Vorrichtung wird bevorzugt in Fenstern von Gebäuden verwendet. In diesem Fall ist die erfindungsgemäße Vorrichtung Bestandteil eines in seiner Lichtdurchlässigkeit schaltbaren Fensters, besonders bevorzugt eines Fensters enthaltend mindestens eine Glasfläche, ganz besonders bevorzugt eines Fensters, welches Mehrscheiben-Isolierglas enthält. Unter Fenster wird dabei insbesondere eine Struktur in einem Gebäude verstanden, welche einen Rahmen und mindestens eine von diesem Rahmen umfasste Glasscheibe enthält. Bevorzugt enthält sie einen wärmeisolierenden Rahmen und zwei oder mehr Glasscheiben (Mehrscheiben-Isolierglas). Gemäß einer bevorzugten Ausführungsform ist die erfindungsgemäße Vorrichtung direkt auf einer Glasfläche eines Fensters aufgebracht, besonders bevorzugt im Zwischenraum zwischen zwei Glasscheiben von Mehrscheiben-Isolierglas.

Weiterhin wird die Vorrichtung bevorzugt als aktive, schaltende Komponente von teilweise lichttransparenten, schaltbaren Autodächern oder von schaltbaren Autofenstern verwendet.
Dabei ist die Schichtabfolge

- Polarisationsschicht
- Substratschicht, bevorzugt aus Glas oder Polymer
- elektrisch leitfähige transparente Schicht, bevorzugt aus ITO
- Orientierungsschicht
- Schaltschicht, enthaltend ein flüssigkristallines Material und mindestens einen dichroitischen Farbstoff
- Orientierungsschicht
- elektrisch leitfähige transparente Schicht, bevorzugt aus ITO
- Substratschicht, bevorzugt aus Glas oder Polymer,

wobei die Polarisationsschicht nach außen gerichtet ist, hin zur Lichtquelle, insbesondere hin zur Sonne.

Weiterhin ist es bevorzugt, insbesondere im Fall der Verwendung der Vorrichtung in schaltbaren Autodächern, dass die Vorrichtung nicht eben, sondern im Raum gekrümmt ist. Dies wird bevorzugt durch die Verwendung gekrümmter Substratschichten erreicht. Dabei werden bevorzugt Polymer-Substratschichten verwendet, die optisch isotrop sind. Dadurch lassen sich Vorrichtungen erhalten, die zwei- oder dreidimensional gebogen sind, und die einheitliche Transmission, auch keine störenden Farbvariationen, aufweisen.

## Ausführungsbeispiele

### 1) Verwendete Materialien für die Schaltschicht

Strukturen von flüssigkristallinen Verbindungen werden durch Abkürzungen wiedergegeben (Akronyme). Für die verwendeten Abkürzungen wird auf die Erläuterungen in WO 2012/052100, S. 63-89, verwiesen.

Alle physikalischen Eigenschaften werden nach "Merck Liquid Crystals, Physical Properties of Liquid Crystals", Status Nov. 1997, Merck KGaA, Deutschland bestimmt und gelten für eine Temperatur von 20°C.

Die folgende Hostmischung wird hergestellt:

| Zusammensetzung der Hostmischung H1 | | |
|---|---|---|
| Klärpunkt | 114.5 °C | |
| Delta-n | 0.1342 | |
| ne | 1.6293 | |
| $n_o$ | 1.4951 | |
| Zusammensetzung | Verbindung | |
| | CPG-3-F | 5 |
| | CPG-5-F | 5 |
| | CPU-3-F | 15 |
| | CPU-5-F | 15 |
| | CP-3-N | 16 |
| | CP-5-N | 16 |

(fortgesetzt)

| Zusammensetzung der Hostmischung H1 | | |
|---|---|---|
| | CCGU-3-F | 7 |
| | CGPC-3-3 | 4 |
| | CGPC-5-3 | 4 |
| | CGPC-5-5 | 4 |
| | CCZPC-3-3 | 3 |
| | CCZPC-3-4 | 3 |
| | CCZPC-3-5 | 3 |

Die folgenden Farbstoffverbindungen werden verwendet:

| |
|---|
| 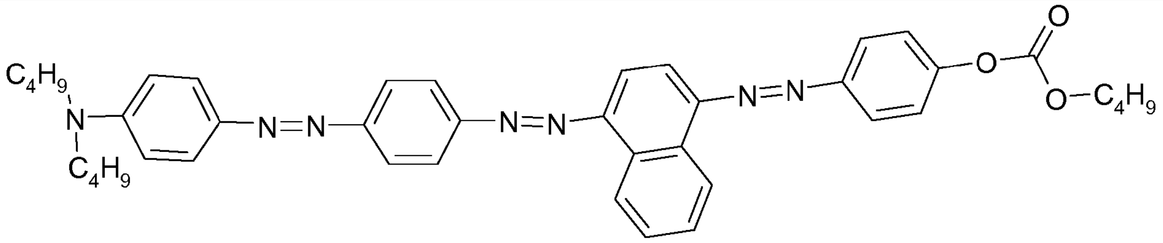 |
| D1 |
| 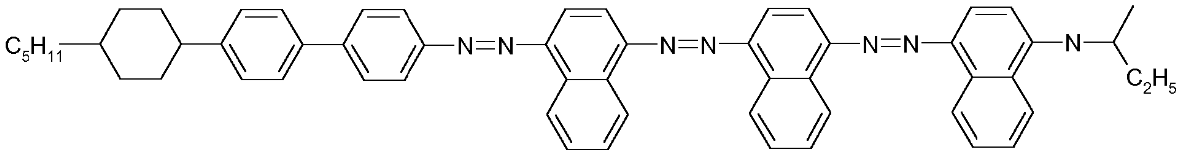 |
| D2 |
| 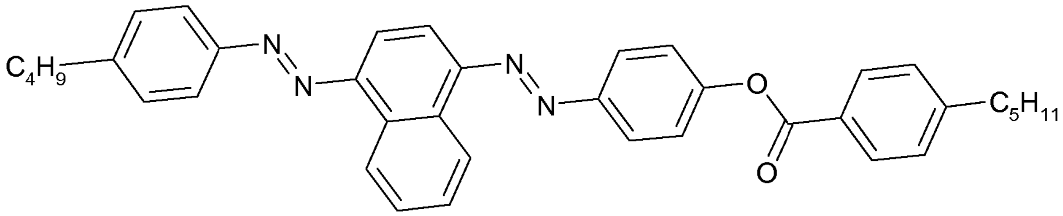 |
| D3 |
| 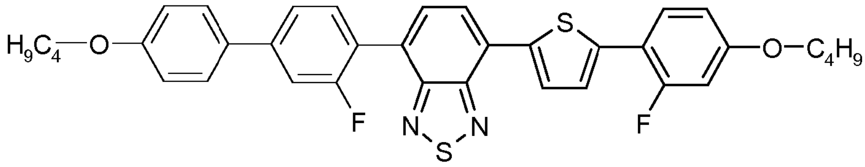 |
| D4 |
| 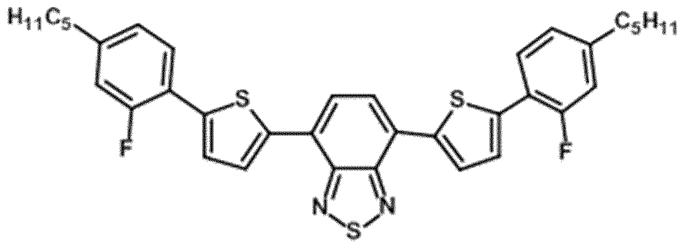 |
| D5 |

| |
|---|
| 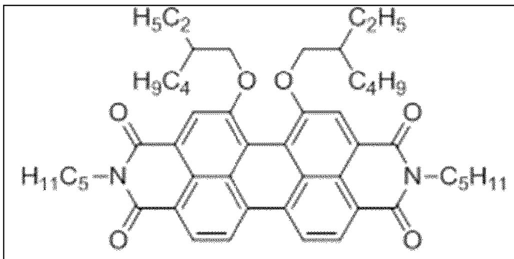 |
| D6 |
| 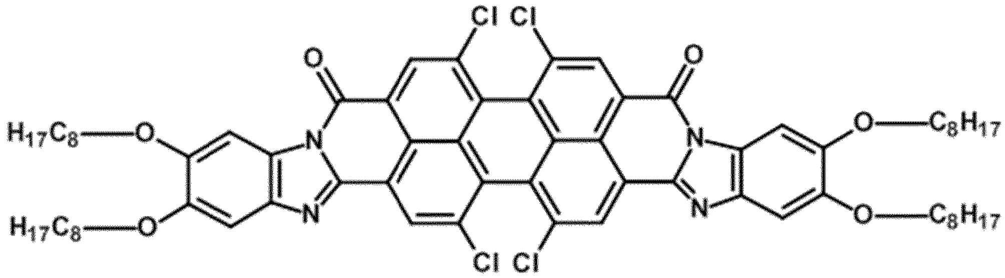 |
| D7 |
| 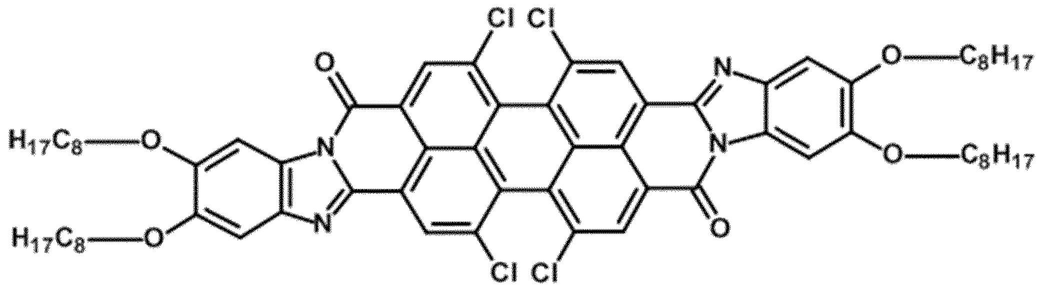 |
| D8 |

Daraus werden die Mischungen M1 und M2 hergestellt, mit folgender Zusammensetzung:

M1: H1 enthaltend 0.47 Gew.-% D1, 1.03 Gew.-% D2 und 0.892 Gew.-% D3.

M2: H1 enthaltend 0.6 Gew.-% D4; 0.3 Gew.-% D5; 1.0 Gew.-% D6; 1.5 Gew.-% D7 und 1.5 Gew.-% D8.

**2) Herstellung der Schaltvorrichtungen**

Die erfindungsgemäßen Vorrichtungen weisen die folgende allgemeine Schichtabfolge auf:

a0) Polarisatorfolie ITOS XP40HT
a) Polymerschicht aus 125μm Polycarbonat mit Retardation kleiner 10nm
b) Indium Zink Oxid (ITO) Schicht, 200 Angström
c) Orientierungsschicht aus Polyimid AL-1054 von JSR, 300 Angström
d) Schaltschicht, Dicke 10 μm
e) wie c)
f) wie b)
g) wie a).

Die Orientierungsschichten werden gerieben, um eine Vorzugsrichtung der Moleküle des flüssigkristallinen Materials zu erreichen. Wenn eine Verdrillung von 90° erreicht werden soll, sind die beiden Orientierungsschichten in der Vorrichtung gekreuzt zueinander angeordnet, das heißt derart, dass die Reiberichtungen einen Winkel von 90° miteinander einschließen. Zusätzlich ist in diesem Fall 0.05 Gew.-% des chiralen Dotanden S-811 im flüssigkristallinen

Material enthalten. Die ITO-Schichten (alternativ können andere, dem Fachmann bekannte elektrisch leitfähige transparente Schichten verwendet werden) werden entsprechend kontaktiert, um elektrisch schaltbar zu sein. Der Zustand ohne Spannung ist bei den hergestellten Schaltvorrichtungen der dunkle Schaltzustand. Durch Anlegen einer Spannung, die die Moleküle des flüssigkristallinen Materials aufrichtet gegenüber der Ebene der Orientierungsschichten, werden die Vorrichtungen in den hellen Schaltzustand geschaltet.

Es werden die folgenden Schaltvorrichtungen hergestellt:

E1: Schaltschicht mit Mischung M1, 90° Verdrillung
E2: Schaltschicht mit Mischung M1, 0° Verdrillung
E3: Schaltschicht mit Mischung M2, 0° Verdrillung

**3) Leistungsdaten der Schaltvorrichtungen**

a) Bestimmung des Lichttransmissionsgrads $T_{v\ dunkel}$ der Schaltschicht

Der Lichttransmissionsgrad $\tau_{v\ dunkel}$ wird nach der Europäischen Norm EN410, Gleichung (1) (Bestimmung der lichttechnischen und strahlungsphysikalischen Kenngrößen von Verglasungen) ermittelt aus den gemessenen spektralen Transmissionsgraden unter Berücksichtigung der relativen spektralen Verteilung der Normlichtart und des spektralen Hellempfindlichkeitsgrads des Normalbeobachters. Dabei wird der Transmissionsgrad $T_v$ der Schaltschicht der Vorrichtungen für Licht, welches parallel zur Hauptachse der Absorption des dichroitischen Farbstoffs im dunklen Schaltzustand der Vorrichtung polarisiert ist, gemessen.

Zur Vermessung der Eigenschaften der Schaltschicht wird das Spektrometer mit zwei GlanThompson Quarz-Polarisatoren in Referenz- und Messstrahl ergänzt. Die zu messende Vorrichtung wird mit ihrer Fläche genau senkrecht zum Lichtstrahl montiert. Die Orientierungsrichtung des ersten dem Lichtstrahl zugewandten Substrates der Vorrichtung wird zum Beispiel so gewählt, dass sie von unten nach oben, also vertikal zum Laborraum zeigt. Da sich positiv dichroitische Farbstoffe genau entlang dieser Richtung ausrichten, ist die Hauptachse der intensivsten Absorption für die unverdrillten Beispiele E2 und E3 genau parallel dieser Richtung. (Für das verdrillte Beispiel E1 ist die erste Schicht ebenfalls genau parallel dieser Richtung und die letzte Schicht genau senkrecht zu dieser Richtung).
Die beiden Glan Thompson Polarisatoren werden so ausgerichtet, dass die Transmission dementsprechend genau in dieser Winkelstellung den niedrigst möglichen Wert erreicht.

Die Messung des spektralen Transmissonsgrades wird bezogen auf eine ansonsten identische Vorrichtung ohne Farbstoff in der Schaltschicht als Referenz, entspricht also dem Quotienten der Lichtintensitäten durch die Schaltschicht mit Farbstoff(en) (Zähler) und der Lichtintensitäten durch die Schaltschicht ohne Farbstoff(e) (Nenner).

| Vorrichtung | Temperatur in °C | Lichttransmissionsgrad $T_{v\ dunkel}$ in % Schaltschicht |
|---|---|---|
| E1 | 20 | 1.8 |
| | 60 | 2.6 |
| | 80 | 2.8 |
| | 120 | 13.8 |
| E2 | 20 | 1.3 |
| | 60 | 1.8 |
| | 80 | 2.0 |
| | 100 | 2.6 |
| | 120 | 11.3 |
| E3 | 20 | 1.8 |
| | 40 | 2.0 |
| | 60 | 2.3 |
| | 80 | 2.6 |
| | 100 | 3.6 |
| | 120 | 17.6 |

b) Bestimmung des Lichttransmissionsgrads $\tau_{v\ dunkel}$ der vollständigen Vorrichtung mit Polarisator

Hierzu wird wie unter a) vorgegangen, mit dem Unterschied, dass zur Berechnung des Lichttransmissionsgrads die Intensitäten nach Lichtdurchtritt durch die komplette Vorrichtung mit Polarisator bestimmt werden (Zähler), und diese in Bezug zu den Intensitäten durch eine Vorrichtung ohne Polarisator und ohne Farbstoffe gesetzt werden.

| Vorrichtung | Temperatur in °C | Lichttransmissionsgrad $T_{v\ dunkel}$ in % | Lichttransmissionsgrad $T_{v\ hell}$ in % |
|---|---|---|---|
| E1 | 20 | 0.7 | 23.9 |
| | 60 | 1.0 | 23.9 |
| | 80 | 1.1 | 22.2 |
| | 120 | 5.4 | 9.1 |
| E2 | 20 | 0.5 | 25.5 |
| | 60 | 0.7 | 23.4 |
| | 80 | 0,8 | 21.8 |
| | 100 | 1.0 | 19.0 |
| | 120 | 4.4 | 10.1 |
| E3 | 20 | 0.7 | 24.5 |
| | 40 | 0.8 | 23.4 |
| | 60 | 0.9 | 21.8 |
| | 80 | 1.0 | 19.6 |
| | 100 | 1.4 | 16.2 |
| | 120 | 6.9 | 6.9 |

Die Ergebnisse zeigen, dass mit den erfindungsgemäßen Vorrichtungen eine hervorragende Verdunklung im dunklen Schaltzustand der Vorrichtung erreicht wird ($\tau_{v\ dunkel}$ = 0.5% - 0.7%). Zudem wird der sehr dunkle Schaltzustand über einen breiten Temperaturbereich erreicht. Selbst bei einer Temperatur oberhalb des Klärpunkts der Hostmischung werden noch niedrige Werte für $\tau_{v\ dunkel}$ im einstelligen Prozentbereich erhalten.

c) Bestimmung der Winkelabhängigkeit der Transmission

Es werden für die Vorrichtungen E1 bis E3 jeweils für verschiedene Wertepaare von Polarwinkel $\theta$ und Azimuthwinkel $\varphi$ die Transmission abhängig von der Wellenlänge bestimmt. Dabei zeigt sich, dass die spektrale Transmission weitgehend unabhängig vom Winkel ist, unter dem Licht durch die Vorrichtung tritt. Dies betrifft einen breiten Wellenlängenbereich. Die Vorrichtungen weisen daher für den Betrachter keine unerwünschte Färbung auf, wenn sie aus unterschiedlichen Blickwinkeln betrachtet werden. Ein weiterer Vorteil ist, dass die Vorrichtungen Licht effektiv für einen breiten Bereich von Durchtrittswinkeln blockieren, wenn sie in den dunklen Schaltzustand geschaltet werden.

Die maximalen Transmissionsänderungen für die Vorrichtungen E1, E2 und E3 sind in den folgenden Tabellen angegeben:

| Vorrichtung E1 | |
|---|---|
| Wellenlänge | Betrag der maximalen Transmissionsänderung ($\Delta$ T%) für einen Winkel $\theta$ = 60° aus der Normalen und dem Winkeln $\varphi$ = 0,45,90,135,180,225,270,315° innerhalb der Ebene relativ zum Wert des Winkels $\theta$ = 0°, $\varphi$ = 0° (=Normale) kleiner als |
| 450nm | 0.8 % |
| 500nm | 1.6 % |
| 550nm | 1.4 % |
| 600nm | 1.2 % |

(fortgesetzt)

| Vorrichtung E1 | |
|---|---|
| Wellenlänge | Betrag der maximalen Transmissionsänderung ($\Delta$ T%) für einen Winkel $\theta$ = 60° aus der Normalen und dem Winkeln $\varphi$ = 0,45,90,135,180,225,270,315° innerhalb der Ebene relativ zum Wert des Winkels $\theta$ = 0°, $\varphi$ = 0° (=Normale) kleiner als |
| 650nm | 1.2 % |
| 700nm | 1.1 % |

| Vorrichtung E2 | |
|---|---|
| Wellenlänge | Betrag der maximalen Transmissionsänderung ($\Delta$ T%) für einen Winkel $\theta$ = 60° aus der Normalen und dem Winkeln $\varphi$ = 0,45,90,135,180,225,270,315° innerhalb der Ebene relativ zum Wert des Winkels $\theta$ = 0°, $\varphi$ = 0° (=Normale) kleiner als |
| 450nm | 1.5 % |
| 500nm | 1.2 % |
| 550nm | 1.0 % |
| 600nm | 1.2 % |
| 650nm | 1.4 % |
| 700nm | 2.2 % |

| Vorrichtung E3 | |
|---|---|
| Wellenlänge | Betrag der maximalen Transmissionsänderung ($\Delta$ T%) für einen Winkel $\theta$ = 60° aus der Normalen und dem Winkeln $\varphi$ = 0,45,90,135,180,225,270,315° innerhalb der Ebene relativ zum Wert des Winkels $\theta$ = 0°, $\varphi$ = 0° (=Normale) kleiner als |
| 450nm | 2.1 % |
| 500nm | 1.0 % |
| 550nm | 1.0 % |
| 600nm | 1.1 % |
| 650nm | 1.6 % |
| 700nm | 1.3 % |

d) Herstellung dreidimensional gebogener Vorrichtungen

Die unter 2) erhaltenen Vorrichtungen werden in eine gebogene Form gebracht, indem sie zwischen zwei Uhrgläsern mit großem Radius fixiert und an diese angepresst werden, so dass sie sich an die Uhrgläser anlegen und deren Krümmung übernehmen.

Anschließend werden die Vorrichtungen geschaltet, und ihre Transmission wird gemessen. Dabei wird sowohl im dunklen als auch im hellen Schaltzustand gleichmäßige Transmission über die Fläche der Vorrichtung beobachtet. Weiterhin werden keine für das Auge sichtbare Farbänderungen beobachtet.

Dies zeigt, dass mit den Vorrichtungen enthaltend Substratschichten aus Polymer gebogene Vorrichtungen erhalten werden können, die eine gleichmäßige Transmission und Farbe aufweisen.

**4) Schaltvorrichtungen enthaltend Substratschichten aus Glas**

Es werden Vorrichtungen wie oben unter 2) genannt hergestellt, die sich lediglich dadurch unterscheiden, dass sie anstelle der Schichten a) und b) die im Folgenden genannten Schichten a') und b') aufweisen:

a') Glasschicht aus 1.1 mm Soda-Lime-Glas von Corning
b') ITO-Schicht, 200 Angström

Mit diesen Vorrichtungen werden gleiche Werte für den Lichttransmissionsgrad $T_v$ erhalten, wie oben für die Vorrichtungen mit Substratschicht aus Polymer genannt wird. Auch werden gleiche Werte für die oben angegebenen maximalen Transmissionsänderungen erhalten.

Es können jedoch wesentlich weniger gut gebogene Vorrichtungen hergestellt werden, da diese leicht unerwartet brechen. Weiterhin zeigen solche gebogenen Vorrichtungen mit Substratschichten aus Glas Farbeffekte bei der Betrachtung aus Winkeln, die von der Normalen abweichen.

## Patentansprüche

1. Optische Schaltvorrichtung, enthaltend

- genau eine Polarisationsschicht, wobei die Polarisationsschicht Licht linear polarisiert, und
- parallel zur Polarisationsschicht angeordnet eine Schaltschicht, enthaltend ein flüssigkristallines Material enthaltend mindestens einen dichroitischen Farbstoff, wobei der mindestens eine dichroitische Farbstoff gewählt ist aus Azoverbindungen, Anthrachinonen, Benzothiadiazolen, Diketopyrrolopyrrolen und Rylenen und der Gesamtanteil der dichroitischen Farbstoffe im flüssigkristallinen Material 0,1 Gew.-% bis 15 Gew.-% beträgt, und wobei das flüssigkristalline Material einen Klärpunkt oberhalb von 80°C hat und eine Verbindung einer Formel (I) enthält

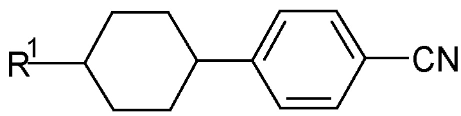

Formel (I),

wobei $R^1$ gewählt ist aus Alkylgruppen mit 1 bis 10 C-Atomen,
wobei die Schaltschicht eine Dicke zwischen 2 $\mu$m und 15 $\mu$m hat und einen dunklen Schaltzustand mit geringer Transmission durch die Schaltschicht und einen hellen Schaltzustand mit hoher Transmission durch die Schaltschicht aufweist,
wobei die Absorptionsachse der Polarisationsschicht im dunklen Schaltzustand der Schaltschicht in einem Winkel von 85° - 95° zur Hauptachse der Absorption des mindestens einen dichroitischen Farbstoffs angeordnet ist,
wobei der Lichttransmissionsgrad $T_v$ nach Norm EN410 der Schaltschicht im dunklen Schaltzustand der Vorrichtung für Licht, welches parallel zur Hauptachse der Absorption des mindestens einen dichroitischen Farbstoffs polarisiert ist, kleiner als 3% ist,
und wobei die Schaltvorrichtung die Schichtabfolge

- die Polarisationsschicht
- Substratschicht
- elektrisch leitfähige transparente Schicht
- Orientierungsschicht
- die Schaltschicht, enthaltend das flüssigkristalline Material enthaltend den mindestens einen dichroitischen Farbstoff
- Orientierungsschicht
- elektrisch leitfähige transparente Schicht
- Substratschicht aufweist,

wobei die Polarisationsschicht zwischen einer Lichtquelle und der Schaltschicht angeordnet ist.

2. Optische Schaltvorrichtung nach Anspruch 1, **dadurch gekennzeichnet, dass** die Polarisationsschicht aus einem Material gebildet ist, welches eine oder mehrere verschiedene organische Farbstoffverbindungen enthält, die eine gemeinsame feste räumliche Ausrichtung aufweisen.

3. Optische Schaltvorrichtung nach Anspruch 1 oder 2, **dadurch gekennzeichnet, dass** die Orientierungsrichtungen der beiden Orientierungsschichten, die die Schaltschicht umgeben, einen Winkel von 0° bis 270° einschließen.

4. Optische Schaltvorrichtung nach einem oder mehreren der Ansprüche 1 bis 3, **dadurch gekennzeichnet, dass** die Moleküle des flüssigkristallinen Materials der Schaltschicht in mindestens einem Schaltzustand der Vorrichtung planar verdrillt vorliegen, wobei die Verdrillung über die Dicke der Schaltschicht einen Wert zwischen 30° und 360° aufweist.

5. Optische Schaltvorrichtung nach einem oder mehreren der Ansprüche 1 bis 4, **dadurch gekennzeichnet, dass** mindestens einer der dichroitischen Farbstoffe der Schaltschicht fluoreszierend ist.

6. Optische Schaltvorrichtung nach einem oder mehreren der Ansprüche 1 bis 5, **dadurch gekennzeichnet, dass** Substratschichten, die an die Polarisationsschicht angrenzen, aus Polymer bestehen.

7. Optische Schaltvorrichtung nach einem oder mehreren der Ansprüche 1 bis 6, **dadurch gekennzeichnet, dass** sie im Raum gekrümmt ist.

8. Optische Schaltvorrichtung nach einem oder mehreren der Ansprüche 1 bis 7, **dadurch gekennzeichnet, dass** sie zwischen der Polarisationsschicht und der von der Schaltschicht aus betrachtet nächstliegenden Substratschicht eine Schicht gewählt aus Klebstoffschichten und Klebefilmen enthält.

9. Fenster für Gebäude, Container oder Fahrzeuge, **dadurch gekennzeichnet, dass** es eine optische Schaltvorrichtung nach einem oder mehreren der Ansprüche 1 bis 8 enthält.

10. Verwendung der optischen Schaltvorrichtung nach einem oder mehreren der Ansprüche 1 bis 8 zur Regulierung des Durchtritts von Sonnenlicht von der Umgebung in einen Raum hinein.

**Claims**

1. Optical switching device comprising

- precisely one polarisation layer, where the polarisation layer linearly polarises light, and
- a switching layer arranged parallel to the polarisation layer, comprising a liquid-crystalline material comprising at least one dichroic dye, where the at least one dichroic dye is selected from azo compounds, anthraquinones, benzothiadiazoles, diketopyrrolopyrroles and rylenes and the total proportion of the dichroic dyes in the liquid-crystalline material is 0.1% by weight to 15% by weight, and where the liquid-crystalline material has a clearing point above 80°C and comprises a compound of a formula (I)

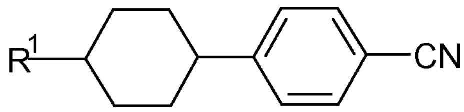

formula (I),

where $R^1$ is selected from alkyl groups having 1 to 10 C atoms, where the switching layer has a thickness between 2 μm and 50 μm and a dark switching state having low transmission through the switching layer and a bright switching state having high transmission through the switching layer,
where the absorption axis of the polarisation layer in the dark switching state of the switching layer is arranged at an angle of 85° - 95° to the principal axis of absorption of the at least one dichroic dye,
where the light transmittance $T_v$, in accordance with the EN410 standard, of the switching layer in the dark switching state of the device for light which is polarised parallel to the principal axis of absorption of the at least one dichroic dye is less than 3%,
and where the switching device has the layer sequence

- the polarisation layer
- substrate layer

- electrically conductive transparent layer
- alignment layer
- the switching layer comprising the liquid-crystalline material comprising the at least one dichroic dye
- alignment layer
- electrically conductive transparent layer
- substrate layer,

where the polarisation layer is arranged between a light source and the switching layer.

2. Optical switching device according to Claim 1, **characterised in that** the polarisation layer is formed from a material which comprises one or more different organic dye compounds which have a common fixed spatial alignment.

3. Optical switching device according to Claim 1 or 2, **characterised in that** the alignment directions of the two alignment layers which surround the switching layer enclose an angle of 0° to 270°.

4. Optical switching device according to one or more of Claims 1 to 3, **characterised in that** the molecules of the liquid-crystalline material of the switching layer are twisted in a planar manner in at least one switching state of the device, where the twist over the thickness of the switching layer has a value between 30° and 360°.

5. Optical switching device according to one or more of Claims 1 to 4, **characterised in that** at least one of the dichroic dyes of the switching layer is fluorescent.

6. Optical switching device according to one or more of Claims 1 to 5, **characterised in that** substrate layers which are adjacent to the polarisation layer consist of polymer.

7. Optical switching device according to one or more of Claims 1 to 6, **characterised in that** it is curved in space.

8. Optical switching device according to one or more of Claims 1 to 7, **characterised in that** it contains a layer selected from adhesive layers and adhesive films between the polarisation layer and the next substrate layer, viewed from the switching layer.

9. Window for buildings, containers or vehicles, **characterised in that** it contains an optical switching device according to one or more of Claims 1 to 8.

10. Use of the optical switching device according to one or more of Claims 1 to 8 for regulation of the passage of sunlight from the environment into a room.

**Revendications**

1. Dispositif de commutation optique comprenant

- précisément une couche de polarisation, dans lequel la couche de polarisation polarise linéairement la lumière, et
- une couche de commutation qui est agencée parallèlement à la couche de polarisation, comprenant un matériau cristallin liquide qui comprend au moins un colorant dichroïque, dans lequel l'au moins un colorant dichroïque est sélectionné parmi les composés azo, les anthraquinones, les benzothiadiazoles, les dicétopyrrolopyrroles et les rylènes et la proportion totale des colorants dichroïques dans le matériau cristallin liquide est de 0,1 % en poids à 15 % en poids, et dans lequel le matériau cristallin liquide présente un point de clarification au-delà de 80° C et comprend un composé d'une formule (I)

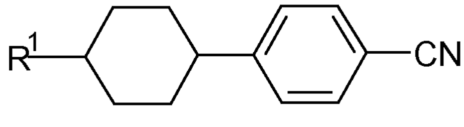

formule (I),

dans laquelle $R^1$ est sélectionné parmi les groupes alkyle qui comportent de 1 à 10 atome(s) de C,
dans lequel la couche de commutation présente une épaisseur entre 2 μm et 50 μm et un état de commutation sombre qui présente une transmission faible au travers de la couche de commutation et un état de commutation lumineux qui présente une transmission élevée au travers de la couche de commutation,
dans lequel l'axe d'absorption de la couche de polarisation dans l'état de commutation sombre de la couche de commutation est agencé selon un angle de 85° - 95° par rapport à l'axe d'absorption principal de l'au moins un colorant dichroïque,
dans lequel la transmittance de la lumière $T_v$, conformément au standard EN410, de la couche de commutation dans l'état de commutation sombre du dispositif pour la lumière qui est polarisée parallèlement à l'axe d'absorption principal de l'au moins un colorant dichroïque est inférieure à 3 %,
et dans lequel le dispositif de commutation présente la séquence de couches

- la couche de polarisation
- couche de substrat
- couche transparente électriquement conductrice
- couche d'alignement
- la couche de commutation qui comprend le matériau cristallin liquide qui comprend l'au moins un colorant dichroïque
- couche d'alignement
- couche transparente électriquement conductrice
- couche de substrat,

dans lequel la couche de polarisation est agencée entre une source de lumière et la couche de commutation.

2. Dispositif de commutation optique selon la revendication 1, **caractérisé en ce que** la couche de polarisation est formée à partir d'un matériau qui comprend un ou plusieurs composé(s) de colorant organique différents qui présentent un alignement spatial fixe commun.

3. Dispositif de commutation optique selon la revendication 1 ou 2, **caractérisé en ce que** les directions d'alignement des deux couches d'alignement qui entourent la couche de commutation renferment un angle de 0° à 270°.

4. Dispositif de commutation optique selon une ou plusieurs des revendications 1 à 3, **caractérisé en ce que** les molécules du matériau cristallin liquide de la couche de commutation sont vrillées d'une façon planaire dans au moins un état de commutation du dispositif, dans lequel le vrillage sur l'épaisseur de la couche de commutation présente une valeur entre 30° et 360°.

5. Dispositif de commutation optique selon une ou plusieurs des revendications 1 à 4, **caractérisé en ce qu'**au moins l'un des colorants dichroïques de la couche de commutation est fluorescent.

6. Dispositif de commutation optique selon une ou plusieurs des revendications 1 à 5, **caractérisé en ce que** des couches de substrat qui sont adjacentes à la couche de polarisation sont constituées en polymère.

7. Dispositif de commutation optique selon une ou plusieurs des revendications 1 à 6, **caractérisé en ce qu'**il est incurvé dans l'espace.

8. Dispositif de commutation optique selon une ou plusieurs des revendications 1 à 7, **caractérisé en ce qu'**il contient une couche qui est sélectionnée parmi les couches adhésives et les films adhésifs entre la couche de polarisation et la couche de substrat suivante, tel que vu depuis la couche de commutation.

9. Vitre pour les bâtiments, les moyens de contenance ou les véhicules, **caractérisée en ce qu'**elle contient un dispositif de commutation optique selon une ou plusieurs des revendications 1 à 8.

10. Utilisation du dispositif de commutation optique selon une ou plusieurs des revendications 1 à 8 pour la régulation du passage de la lumière du soleil en provenance de l'environnement à l'intérieur d'une pièce.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2014187529 A1
- US 20160085108 A1
- WO 2015055274 A1
- WO 2015117736 A1
- WO 2012052100 A1
- US 20160033807 A1
- US 7038745 B
- US 6099758 A
- US 20110043732 A
- US 7023602 B
- WO 2013097919 A
- WO 2014187529 A
- WO 2015090497 A
- WO 2014090373 A
- WO 2009141295 A
- WO 2012052100 A


### In der Beschreibung aufgeführte Nicht-Patentliteratur


- **B. JELLE et al.** *Solar Energy Materials & Solar Cells,* 2012, 1-28
- *echnical Digest SID,* 2006, vol. 45.1
- **THULSTRUP et al.** *Spectrochimica Acta,* 1988, vol. 8, 767-782
- **MANFRED RICHTER.** Einführung in die Farbmetrik. Verlag Walter de Gruyter & Co, 1981
- Merck Liquid Crystals, Physical Properties of Liquid Crystals. Merck KGaA, November 1997